# EUROPÄISCHE PATENTSCHRIFT

(11) **EP 2 535 365 B1**
(45) Veröffentlichungstag und Bekanntmachung des Hinweises auf die Patenterteilung: **25.09.2013**
(21) Anmeldenummer: 11004967.3
(22) Anmeldetag: 17.06.2011
(51) Int. Cl.: C08G 69/14, C08L 77/02

(54) **Teilaromatische Formmassen und deren Verwendungen**
Partially aromatic moulding masses and their applications
Masses de formage partiellement aromatiques et leurs utilisations

(43) Veröffentlichungstag der Anmeldung: 19.12.2012
(73) Patentinhaber: EMS-PATENT AG, 7013 Domat/Ems (CH)
(72) Erfinder: Bayer, Andreas, Dr.rer.nat., CH-7013 Domat Ems (CH); Lamberts, Nikolai, Dipl.-Chem., CH-7402 Bonaduz (CH); Hoffmann, Botho, Dr.rer.nat., CH-7013 Domat/Ems (CH); Hewel, Manfred, Dr.rer.nat./Dipl.-Chem., CH-7013 Domat/Ems (CH)
(74) Vertreter: Pfenning, Meinig & Partner GbR

(56) Entgegenhaltungen:
- EP-A1- 2 060 596
- WO-A1-2006/074934

## Beschreibung

### TECHNISCHES GEBIET

Die vorliegende Erfindung betrifft wärmealterungsbeständige Polyamid-Formmassen auf Basis teilkristalliner, teilaromatischer Polyamide sowie Verfahren zu deren Herstellung und Verwendungen davon.

### STAND DER TECHNIK

Thermoplastische Polyamide werden häufig in Form von glasfaserverstärkten Formmassen als Konstruktionswerkstoffe für Bauteile, die während ihrer Lebensdauer erhöhten Temperaturen ausgesetzt sind, eingesetzt, wobei es zu thermooxidativen Schädigungen kommt. Durch Zusatz von bekannten Wärmestabilisatoren kann das Auftreten der thermooxidativen Schädigung zwar hinausgezögert, nicht aber dauerhaft verhindert werden, was sich z.B. in einem Abfallen der mechanischen Kennwerte äußert. Die Verbesserung der Wärmealterungsbeständigkeit von Polyamiden ist überaus wünschenswert, da dadurch längere Lebenszeiten für thermisch belastete Bauteile erreicht werden können bzw. deren Ausfallrisiko gesenkt werden kann. Alternativ kann eine verbesserte Wärmealterungsbeständigkeit auch den Einsatz der Bauteile bei höheren Temperaturen ermöglichen.

Die Wärmealterungsbeständigkeit ist in den bekannten Polyamidformmassen, insbesondere über längere thermische Belastungszeiträume und bei Temperaturen über 200 °C, immer noch unzureichend.

Zur Verbesserung der Verarbeitbarkeit teilaromatischer Polyamide des Typs PA9T schlägt US 2003/0023008 A1 vor, spezifische Polyamide mit einem Kohlenstoff/Amid-Verhältnis von 7 bis 12 in einer Konzentration von 10 bis 50 Gew.-% zu zumischen. Durch diese Maßnahme soll die Glas- und die Kristallisationstemperatur von PA9T unter Beibehaltung der Schmelztemperatur deutlich gesenkt werden können, womit tiefere Formtemperaturen und somit eine konventionelle Beheizung der Spritzgussformen ermöglicht werden. Wie Vergleichsbeispiel CE5 belegt, wird der Blend PA9T mit 20 Gew.-% PA6 jedoch nicht als vorteilhaft angesehen. Ferner wird auch keine gegenüber dem teilaromatischen Polyamid verbesserte Hitzestabilität aufgezeigt.

WO 2006/74934 A1 betrifft wärmestabilisierte Formmassen auf Basis einer Polyamidmischung und einer Übergangsmetallverbindung, welche beispielsweise im Motorenbereich von Automobilen oder im Elektro- bzw. Elektronikbereich eingesetzt werden können. Die Polyamidmischung setzt sich aus mindestens 50 Gew.-% eines teilkristallinen oder amorphen Polyamids (a1) zusammen, deren Schmelz- oder Glasübergangstemperatur mindestens 200 °C beträgt und einem zweiten, teilkristallinen oder amorphen Polyamid (a2) mit einem C/N-Verhältnis von höchstens 7, deren Schmelz- oder Glasübergangstemperatur mindestens 20 °C unter derjenigen von (a1) liegt. Bevorzugtes Übergangsmetall ist Eisen, das in den Beispielen als Eisenoxid zum Einsatz kommt. Bevorzugtes Polyamid (a2) ist PA6. In den Beispielen werden nur die aliphatischen Polyamide PA46 und PA46/6 als Blendkomponente in Kombination mit 25 Gew.-% PA6 verwendet. Außerdem zeigt nur die Kombination von Kupfer- und Eisenstabilisierung eine Verbesserung der Hitzebeständigkeit. Wie die Vergleichsbeispiele A bis E klar aufzeigen, wird durch einen Zusatz von PA6 bzw. PA11 zu PA46 keine Verbesserung der Hitzebeständigkeit im Vergleich zu einem konventionell kupferstabilisierten PA46 erreicht.

US 2009/0127740 A1 beschreibt ein Verfahren zur Herstellung eines aus mindestens zwei aneinander haftenden Teilen bestehenden Bauteils, wobei mindestens ein Teil aus einem Blend aus teilaromatischem und aliphatischem Polyamid gebildet ist. Hierbei wird in der bevorzugtesten Variante 65 bis 95 Gew.-% teilaromatisches Polyamid (A) mit 5 bis 35 Gew.-% aliphatischem Polyamid (B) gemischt, um die Haftung thermoplastisch aufeinander geformter Teile, hergestellt auf Basis teilaromatischen Polyamidformmassen, zu verbessern. Auch PA6 wird u.a. als aliphatisches Polyamid genannt und in Beispiel 1 eingearbeitet, wobei aber spezifisch modifizierte Polyolefine zugegeben werden müssen. Die Komponente (A) setzt sich zu gleichen Gewichtsteilen aus PA 6T/DT und PA 6T/66 zusammen (D=2-Methylpentandiamin). Über eine verbesserte Hitzestabilität dieser Formmassen wird nicht berichtet.

### DARSTELLUNG DER ERFINDUNG

Es ist Aufgabe der Erfindung, Polyamidformmassen auf Basis teilkristalliner, teilaromatischer Polyamide zur Verfügung zu stellen, aus denen bevorzugt Bauteile für den Automobil- sowie den Elektro-/Elektronikbereich hergestellt werden können, die sich insbesondere durch eine hohe Wärmealterungsbeständigkeit bei Temperaturen von wenigstens 180 °C, insbesondere bei Temperaturen von über 200 °C, und einer hohen Wärmeformbeständigkeit, insbesondere von über 220 °C (HDT A) und besonders bevorzugt über 240°C (HDT A) auszeichnen. Unter einer guten Wärmealterungsbeständigkeit ist hierbei zu verstehen, dass die Bruchfestigkeit und die Bruchdehnung nach einer Lagerung von 2500 Stunden bei 220 °C im Vergleich zum Ausgangswert noch zu 50 % bzw. 40 % und nach einer Lagerung von 2500 Stunden bei 180 °C im Vergleich zum Ausgangswert noch zu 60% bzw. 50% erhalten bleibt. Gleichzeitig müssen die Bauteile eine ausreichende Festigkeit/Steifigkeit bei höheren Temperaturen, insbesondere bei Temperaturen größer als 100 °C aufweisen.

Diese Aufgabe wird gelöst durch Polyamidformmassen mit folgender Zusammensetzung:
(A) 27-84,99 Gew.-% einer Polyamidmischung bestehend aus
   (A1) mindestens einem teilaromatischen, teilkristallinen Polyamid mit einem Schmelzpunkt im Bereich von 255 bis 330°C,
   (A2) mindestens einem, sich vom mindestens einen teilaromatischen, teilkristallinen Polyamid (A1) unterscheidenden caprolactamhaltigen Polyamid mit einem Gehalt an Caprolactam von wenigstens 50 Gew.-%,
   wobei der Gesamtcaprolactamgehalt, d.h. die Summe des in Polyamid (A1) und Polyamid (A2) enthaltenen Caprolactams, 22 bis 30 Gew.-%, bezogen auf die Polyamidmischung, beträgt,
(B) 15-65 Gew.-% mindestens eines Füll- und Verstärkungsmittels,
(C) 0,01-3,0 Gew.-% mindestens eines Wärmestabilisators,
(D) 0-5,0 Gew.-% mindestens eines Additivs,
wobei sich die Komponenten (A)-(D) auf 100 Gew.-% ergänzen und der Polyamid-Formmasse keine Metallsalze und/oder Metalloxide eines Übergangsmetalls der Gruppe VB, VIB, VIIB oder VIIIB des Periodensystems zugesetzt sind.

Darüber hinaus ist die erfindungsgemäße Formmasse bevorzugt frei an Übergangsmetallen der Gruppe VB, VIB, VIIB oder VIIIB des Periodensystems. D.h. es werden keine solchen Übergangsmetalle oder Übergangsmetallverbindungen der Formmasse zugesetzt.

Die erfindungsgemäßen Formmassen zeichnen sich überraschenderweise durch ihre gute Wärmealterungsbeständigkeit über lange Zeiträume aus. Insbesondere beträgt ihre Bruchfestigkeit nach 2500 Stunden ≧ 50 % (bestimmt als Differenz der Bruchfestigkeitswerte gemäß ISO 527 zum Zeitpunkt Null und nach Ende der Lagerung bei 220 °C). Gleichzeitig erweichen die erfindungsgemässen Formmassen erst bei hohen Temperaturen und besitzen eine Wärmeformbeständigkeit (HDT A) von wenigstens 240 °C.

Erfindungsgemäß wird als Bestandteil (A1) der Polyamidmischung bzw. Polyamidmatrix A ein teilaromatisches und gleichzeitig teilkristallines Polyamid mit einem Schmelzpunkt im Bereich von 255 bis 330 °C verwendet. Der Schmelzpunkt von Polyamiden hängt dabei im Wesentlichen nur bedingt vom Molekulargewicht bzw. der intrinsischen Viskosität der Polyamide ab, sondern wird vielmehr durch die chemische Zusammensetzung durch Wahl der entsprechenden Monomere bedingt. Somit können die für die Erfindung einsetzbaren Polyamide über einen breiten Bereich variieren, vorausgesetzt, dass ihr Schmelzpunkt im zuvor genannten Bereich liegt. Die Schmelzpunkte für die jeweiligen teilaromatischen und teilkristallinen Polyamide sind tabellarisierte Standard-Parameter für die jeweiligen Polyamide, können aber auch anhand einfacher Versuche nachvollzogen werden.

Unter einem caprolactamhaltigen Polyamid ist erfindungsgemäß ein Polyamid zu verstehen, das durch Polymerisation von Caprolactam bzw. Copolymerisation/-polykondensation von Caprolactam mit weiteren Monomeren herstellbar ist. Das Caprolactam-haltige Polymer enthält somit mindestens 50 Gew.-% Wiederholungseinheiten, die von Caprolactam abgeleitet sind.

Um den gefüllten bzw. verstärkten Formmassen eine ausreichende Wärmealterungsbeständigkeit zu verleihen, wird dem teilkristallinen, teilaromatischen Polyamid ein caprolactamhaltiges Polyamid zugesetzt, so dass der Caprolactamgehalt der Polyamidmatrix 22 bis 30, bevorzugt 23 bis 29 und insbesondere bevorzugt 24 bis 28 Gew.-% beträgt. Durch eine höhere Konzentration an Caprolactam wird die Wärmealterungsbeständigkeit nicht mehr wesentlich verbessert, aber die Wärmeformbeständigkeit der Formmassen sowie die Festigkeit bei hohen Temperaturen zu stark reduziert. Unterhalb einer Caprolactamkonzentration von 22 Gew.-%, bezogen auf die Summe der Polyamide (A1) und (A2), kann die gewünschte hohe Wärmealterungsbeständigkeit nicht mehr sichergestellt werden.

Bei einer bevorzugten Polyamid-Formmasse gemäß der vorliegenden Erfindung besteht die Polyamidmischung A aus
(A1) 70-78 Gew.-% mindestens einem teilaromatischen, teilkristallinen Polyamid mit einem Schmelzpunkt im Bereich von 255 - 330°C, und
(A2) mindestens einem caprolactamhaltigen Polyamid mit einem Gehalt an Caprolactam von wenigstens 50 Gew.-%,
   wobei Komponente (A1) frei von Caprolactam und Aminocapronsäure ist, d.h. keine hiervon abgeleiteten Wiederholungseinheiten beinhaltet.

Die weiter oben genannten Parameter bzw. Gehalte an weiteren Verbindungen werden dabei beibehalten.

Die erfindungsgemäßen Polyamidformmassen enthalten 27 bis 84,99 Gew.-%, bevorzugt 30 bis 79,9 Gew.-%, insbesondere bevorzugt 35 bis 70 Gew.-%, einer Polyamidmatrix bestehend aus teilkristallinen, teilaromatischen Polyamiden mit einem Schmelzpunkt von 255 bis 330 °C (A1) und von A1 verschiedenen Polyamiden auf Basis von Caprolactam (A2).

Die Polyamidkomponente (A2) besteht zu mindestens 50 Gew.-%, bevorzugt zu mindestens 60 Gew.-% und insbesondere bevorzugt zu mindesten 70 Gew.-% aus Caprolactam. Die Polyamidkomponente (A2) ist bevorzugt ein teilkristallines, aliphatisches Polyamid.

Dabei beträgt der Gesamtcaprolactamgehalt, d.h. die Summe des in Polyamid (A1) und Polyamid (A2) enthaltenen Caprolactams, 22 bis 30 Gew.-%, bevorzugt 23 bis 29 Gew.-% und insbesondere bevorzugt 24 bis 28 Gew.-%, bezogen auf die Polyamidmischung aus (A1) und (A2).

Bevorzugt ist die erfindungsgemäße Formmasse frei von Polyolefinen, insbesondere frei von Polyethylen-α-olefin-copolymeren.

### Komponente (A1)

Bei der Komponente (A1) handelt es sich um teilkristalline, teilaromatische Polyamide, welche bevorzugtermaßen eine Glasübergangstemperatur im Bereich von 90 bis 140 °C, bevorzugt im Bereich von 110 bis 140 °C und insbesondere.im Bereich von 115 bis 135 °C besitzen.

Der Schmelzpunkt des Polyamids (A1) liegt im Bereich von 255 bis 330 °C, bevorzugt im Bereich von 270 bis 325 °C und insbesondere im Bereich von 280 bis 320 °C.

Bevorzugte teilaromatische teilkristalline Polyamide sind dabei aus
a) 30 bis 100 mol-%, insbesondere 50 bis 100 mole Terephthalsäure und/oder Naphthalindicarbonsäure sowie 0 bis 70 mol-%, insbesondere 0 bis 50 mol-% mindestens einer aliphatischen Dicarbonsäure mit 6 bis 12 Kohlenstoffatomen, und/oder 0 bis 70 mol-%, insbesondere 0 bis 50 mol-% mindestens einer cycloaliphatischen Dicarbonsäure mit 8 bis 20 Kohlenstoffatomen, und/oder 0 bis 50 mol-% Isophthalsäure, bezogen auf die Gesamtmenge der Dicarbonsäuren
b) 80 bis 100 mol-% mindestens eines aliphatischen Diamins mit 4-18 Kohlenstoffatomen, vorzugsweise mit 6 bis 12 Kohlenstoffatomen sowie 0 bis 20 mol-% mindestens eines cycloaliphatischen Diamins, vorzugsweise mit 6 bis 20 Kohlenstoffatomen, und/oder 0 bis 20 mol-% mindestens eines araliphatischen Diamins, wie z.B. PACM, MACM, IPDA, MXDA und PXDA, bezogen auf die Gesamtmenge der Diamine, sowie gegebenenfalls
c) Aminocarbonsäuren und/oder Lactamen je mit 6 bis 12 Kohlenstoffatomen,
hergestellt.

Gemäß einer bevorzugten Ausführungsform wird dabei das teilaromatische Polyamid der Komponente (A1) auf Basis von wenigstens 30 Mol-%, insbesondere von wenigstens 50 Mol-% Terephthalsäure und wenigstens 80 Mol-% aliphatischen Diaminen mit 4 bis 18 Kohlenstoffatomen, vorzugsweise mit 6-12 Kohlenstoffatomen, und gegebenenfalls weiteren aliphatischen, cycloaliphatischen und aromatischen Dicarbonsäuren sowie Lactamen und/oder Aminocarbonsäuren, gebildet. Als weitere aromatische Dicarbonsäuren können neben der Terephthalsäure Isophthalsäure und Naphthalindicarbonsäure verwendet werden. Geeignete aliphatische und cycloaliphatische Dicarbonsäuren, die neben Terephthalsäure verwendet werden können, besitzen 6 bis 36 Kohlenstoffatome und werden in einem Anteil von höchstens 70 Mol-%, insbesondere in einem Anteil von höchstens 50 Mol-%, bezogen auf die Gesamtmenge der Dicarbonsäuren, eingesetzt.

Zudem ist bevorzugt, dass die genannten aromatischen Dicarbonsäuren des teilaromatischen Polyamids der Komponente (A1) ausgewählt sind aus der Gruppe: Terephthalsäure, Isophthalsäure, sowie Mischungen davon.

Gemäß einer weiteren bevorzugten Ausführungsform sind die genannten z.B. aliphatischen Dicarbonsäuren des teilaromatischen Polyamids der Komponente (A1), die neben Terephthalsäure eingesetzt werden können, ausgewählt aus der Gruppe Adipinsäure, Korksäure, Azelainsäure, Sebazinsäure, Undecandisäure, Dodecandisäure, Brassylsäure, Tetradecandisäure, Pentadecandisäure, Hexadecandisäure, Octadecandisäure und Dimerfettsäure (C36). Unter den Dicarbonsäuren werden Adipinsäure, Sebazinsäure, Dodecandisäure, Isophthalsäure oder eine Mischung derartiger Dicarbonsäuren, besonders Adipinsäure und Isophthalsäure und besonders Adipinsäure alleine bevorzugt.

Gemäß einer weiteren bevorzugten Ausführungsform sind die genannten aliphatischen Diamine des teilaromatischen Polyamids der Komponente (A1) ausgewählt aus der Gruppe 1,4-Butandiamin, 1,5-Pentandiamin, 1,6-Hexandiamin, 1,7-Heptandiamin, 1,8-Octandiamin, 1,9-Nonandiamin, Methyl-1,8-Octandiamin, 1,10-Decandiamin, 1,11-Undecandiamin, 1,12-Dodecandiamin, oder einer Mischung derartiger Diamine, wobei 1,6-Hexandiamin, 1,10-Decandiamin, 1,12-Dodecandiamin, oder eine Mischung derartiger Diamine bevorzugt ist, wobei 1,6-Hexandiamin und 1,10-Decandiamin besonders bevorzugt sind. Neben den aliphatischen Diaminen können in einer Konzentration von 0 bis 20 Mol-%, bezogen auf die Gesamtmenge an Diaminen, cycloaliphatische und/oder araliphatische Diamine ersetzt werden.

Besonders bevorzugt werden die hochschmelzenden Polyamide aus folgenden Komponenten gebildet:
a) (A1a) Dicarbonsäuren:
   50 - 100 Mol-% aromatische Terephthalsäure und/oder Naphthalindicarbonsäure, bezogen auf den Gesamtgehalt an anwesenden Dicarbonsäuren,
   0 - 50 Mol-% einer aliphatischen Dicarbonsäure, bevorzugt mit 6 bis 12 Kohlenstoffatomen, und/oder einer cycloaliphatischen Dicarbonsäure mit bevorzugt 8 bis 20 Kohlenstoffatomen, und/oder Isophthalsäure;
b) (A1b) Diamine:
   80 - 100 Mol-% mindestens eines aliphatischen Diamins mit 4-18 Kohlenstoffatomen, vorzugsweise mit 6 bis 12 Kohlenstoffatomen, bezogen auf den Gesamtgehalt an anwesenden Diaminen,
   0 - 20 Mol-% cycloaliphatische Diamine, vorzugsweise mit 6 bis 20 Kohlenstoffatomen, und/oder araliphatische Diamine, wie z.B. PACM, MACM, IP-DA, MXDA und PXDA,
   wobei in den hochschmelzenden Polyamiden der prozentuale Molgehalt an Dicarbonsäuren 100 % und der prozentuale Molgehalt an Diaminen 100 % ausmacht, und gegebenenfalls aus:
c) (A1c) Aminocarbonsäuren und/oder Lactamen, enthaltend Lactame mit bevorzugt 6 bis 12 Kohlenstoffatomen, und/oder Aminocarbonsäuren mit bevorzugt 6 bis 12 Kohlenstoffatomen.

Während die Komponenten (A1a) und (A1b) weitgehend äquimolar eingesetzt werden, beträgt die Konzentration von (A1c) höchstens 20 Gew.-%, bevorzugt höchstens 15 Gew.-%, insbesondere höchstens 12 Gew.-%, jeweils bezogen auf die Summe von (A1a) bis (A1c).

Zusätzlich zu den weitgehend äquimolar eingesetzten Komponenten (A1a) und (A1b) können Dicarbonsäuren (A1a) oder Diamine (A1b) zur Regelung der Molmasse oder zum Ausgleich von Monomerverlusten bei der Polyamidherstellung eingesetzt werden, sodass in ihrer Gesamtheit die Konzentration einer Komponente (A1a) oder (A1b) überwiegen kann.

Geeignete cycloaliphatische Dicarbonsäuren sind die cis- und/oder trans-Cyclohexan-1,4-dicarbonsäure und/oder cis- und/oder trans-Cyclohexan-1,3-dicarbonsäure (CHDA).

Die oben genannten, obligatorisch eingesetzten aliphatischen Diamine können in untergeordneter Menge von nicht mehr als 20 Mol-%, von vorzugsweise nicht mehr als 15 Mol-% und insbesondere nicht mehr als 10 Mol-%, bezogen auf die Gesamtmenge der Diamine, durch andere Diamine ersetzt werden. Als cycloaliphatische Diamine können beispielsweise Cyclohexandiamin, 1,3-Bis-(aminomethyl)-cyclohexan (BAC), Isophorondiamin, Norbornandimethylamin, 4,4'-Diaminodicyclohexylmethan (PACM), 2,2-(4,4'-Diaminodicyclohexyl)propan (PACP) und 3,3'-Dimethyl-4,4'-diaminodicyclohexylmethan (MACM) verwendet werden. Als araliphatische Diamine seien m-Xylylendiamin (MXDA) und p-Xylylendiamin (PXDA) erwähnt.

Zusätzlich zu den beschriebenen Dicarbonsäuren und Diaminen können noch Lactame und/oder Aminocarbonsäuren als polyamidbildende Komponenten (Komponente (A1c)) eingesetzt werden. Geeignete Verbindungen sind beispielsweise Caprolactam (CL), α,ω-Aminocapronsäure, α,ω-Aminononansäure, α,ω-Aminoundecansäure (AUA), Laurinlactam (LL) und α,ω-Aminododecansäure (ADA). Die Konzentration der zusammen mit den Komponenten (A1a) und (A1b) eingesetzten Aminocarbonsäuren und/oder Lactame beträgt höchstens 20 Gew.-%, bevorzugt höchstens 15 Gew.-% und besonders bevorzugt höchstens 12 Gew.-%, bezogen auf die Summe der Komponenten (A1a) bis (A1c) Speziell bevorzugt sind Lactame bzw. α,ω-Aminosäuren mit 4, 6, 7, 8, 11 oder 12 C-Atomen. Dies sind die Lactame Pyrrolidin-2-on (4 C-Atome), ε-Caprolactam (6 C-Atome), Önanthlactam (7 C-Atome), Capryllactam (8 C-Atome), Laurinlactam (12 C-Atome) bzw. die α,ω-Aminosäuren 1,4-Aminobutansäure, 1,6-Aminohexansäure, 1,7-Aminoheptansäure, 1,8-Aminooctansäure, 1,11-Aminoundecansäure und 1,12-Aminododecansäure.

In einer besonders bevorzugten Ausführungsform ist Komponente A1 frei von Caprolactam bzw. Aminocapronsäure.

Zur Regelung der Molmasse, der relativen Viskosität bzw. der Fliessfähigkeit oder des MVR können dem Ansatz und/oder dem Vorkondensat (vor der Nachkondensation) Regler in Form von Monocarbonsäuren oder Monoaminen zugesetzt werden. Als Regler geeignete, aliphatische, cycloaliphatische oder aromatische Monocarbonsäuren oder Monoamine sind Essigsäure, Propionsäure, Buttersäure, Valeriansäure, Capronsäure, Laurinsäure, Stearinsäure, 2-Ethylhexansäure, Cyclohexansäure, Benzoesäure, 3-(3,5-di-*tert*-butyl-4-hydroxyphenyl)propansäure, 3,5-di-*tert*-butyl-4-hydroxybenzoesäure, 3-(3-*tert*-butyl-4-hydroxy-5-methylphenyl)propansäure, 2-(3,5-di-*tert*-butyl-4-hydroxybenzylthio)essigsäure, 3,3-bis(3-*tert*-butyl-4-hydroxyphenyl)butansäure, Butylamin, Pentylamin, Hexylamin, 2-Ethylhexylamin, n-Octylamin, n-Dodecylamin, n-Tetradecylamin, n-Hexadecylamin, Stearylamin, Cyclohexylamin, 3-(Cyclohexylamino)-propylamin, Methylcyclohexylamin, Dimethylcyclohexylamin, Benzylamin, 2-Phenylethylamin, 2,2,6,6-tetramethylpiperidin-4-amin, 1,2,2,6,6-pentamethylpiperidin-4-amin, 4-amino-2,6-di-*tert*-butylphenol u.a. Die Regler können einzeln oder in Kombination benutzt werden. Es können auch andere monofunktionelle Verbindungen als Regler eingesetzt werden, die mit einer Amino- oder Säuregruppe reagieren können, wie Anhydride, Isocyanate, Säurehalogenide oder Ester. Die übliche Einsatzmenge der Regler liegt zwischen 10 und 200 mmol pro kg Polymer.

Die teilaromati.schen Copolyamide (A1) können mit an sich bekannten Verfahren hergestellt werden. Geeignete Verfahren sind an verschiedener Stelle beschrieben worden, und in der Folge sollen einige der möglichen in der Patentliteratur diskutierten Verfahren angegeben werden, der Offenbarungsgehalt der nachfolgend genannten Dokumente wird hinsichtlich des Verfahrens zur Herstellung des Copolyamids der Komponente (A) der vorliegenden Erfindung ausdrücklich in den Offenbarungsgehalt der vorliegenden Anmeldung eingeschlossen: DE-A-195 13 940, EP-A-0 976 774, EP-A-0 129 195, EP-A-0 129 196, EP-A-0 299 444, US 4,831,106, US 4,607,073, DE-A-14 95 393 und US 3,454,536.

Konkrete Vertreter für die erfindungsgemäßen Polyamide (A1) sind: PA 4T/4I, PA 4T/6I, PA 5T/5I, PA 6T/6, PA 6T/6I, PA 6T/6I/6, PA 6T/66, 6T/610, 6T/612, PA 6T/10T, PA 6T/10I, PA 9T, PA 10T, PA 12T, PA 10T/10I, PA10T/106, PA10T/12, PA10T/11, PA 6T/9T, PA 6T/12T, PA 6T/10T/6I, PA 6T/6I/6, PA 6T/6I/12 sowie Mischungen davon, insbesondere vorzugsweise ist das teilaromatische Polyamid der Komponente (A) ausgewählt aus der Gruppe: PA 6T/6I, PA 6T/66, PA 6T/10T, PA 6T/10T/6I, sowie Mischungen davon. Bevorzugt werden Polyamide (A1), welche 6T-Einheiten, insbesondere wenigstens 10 Gew.-% an 6T-Einheiten enthalten.

Erfindungsgemäß sind daher als hochschmelzende Polyamide (A1) insbesondere folgende teilaromatische Copolyamide bevorzugt:
- teilkristallines Polyamid 6T/6I mit 50 bis 80 Mol-% Hexamethylenterephthalamid-Einheiten und 20 bis 50 Mol-% Hexamethylenisophthalamid-Einheiten;
- teilkristallines Polyamid 6T/6I mit 55 bis 75 Mol-% Hexamethylenterephthalamid-Einheiten und 25 bis 45 Mol-% Hexamethylenisophthalamid-Einheiten;
- teilkristallines Polyamid 6T/6I mit 62 bis 73 Mol-% Hexamethylenterephthalamid-Einheiten und 25 bis 38 Mol-% Hexamethylenisophthalamid-Einheiten;
- teilkristallines Polyamid 6T/6I mit 70 Mol-% Hexamethylenterephthalamid-Einheiten und 30 Mol-% Hexamethylenisophthalamid-Einheiten;
- teilkristallines Polyamid 6T/66 mit 30 bis 80 Mol-% Hexamethylenterephthalamid-Einheiten und 20 bis 70 Mol-% Hexamethylenadipamid-Einheiten
- teilkristallines Polyamid 6T/66 mit 50 bis 70 Mol-% Hexamethylenterephthalamid-Einheiten und 30 bis 50 Mol-% Hexamethylenadipamid-Einheiten;
- teilkristallines Polyamid 6T/66 mit 50 bis 60 Mol-% Hexamethylenterephthalamid-Einheiten und 40 bis 50 Mol-% Hexamethylenadipamid-Einheiten;
- teilkristallines Polyamid 6T/66 mit 55 bis 60 Mol-% Hexamethylenterephthalamid-Einheiten und 40 bis 45 Mol-% Hexamethylenadipamid-Einheiten;
- teilkristallines Polyamid, hergestellt aus mindestens 50 Mol-% Terephthalsäure und höchstens 50 Mol-% Isophthalsäure sowie einer Mischung aus mindestens zwei Diaminen, ausgewählt aus der Gruppe Hexamethylendiamin, Nonandiamin, Methyloctandiamin und Decandiamin;
- teilkristallines Polyamid, hergestellt aus mindestens 70 Mol-% Terephthalsäure und höchstens 30 Mol-% Isophthalsäure sowie einer Mischung aus Hexamethylendiamin und Dodecandiamin;
- teilkristallines Polyamid, hergestellt aus mindestens 50 Mol-% Terephthalsäure und höchstens 50 Mol-% Dodekandisäure sowie einer Mischung aus mindestens zwei Diaminen, ausgewählt aus der Gruppe Hexamethylendiamin, Nonandiamin, Methyloctandiamin und Decandiamin;
- teilkristallines Polyamid 6T/10T mit 10 bis 60 Mol-%, bevorzugt 10 bis 40 Mol-% Hexamethylenterephthalamid-(6T)- und 40 bis 90 Mol-%, bevorzugt 60 bis 90 Mol-% Decamethylenterephthalamid-(10T)-Einheiten;
- teilkristallines Polyamid 6T/10T/6I mit 50 bis 90 Mol-%, vorzugsweise 50-70 Mol-% Hexamethylenterephthalamid-(6T)-, und 5 bis 45 Mol-%, vorzugsweise 10-30 Mol-% Hexamethylenisophthalamid-(6I)-Einheiten und 5 bis 45 Mol-%, vorzugsweise 20-40 Mol-% Decamethylenterephthalamid-(10T)-Einheiten;
- teilkristallines Polyamid 6T/6I/6 mit 60 bis 85 Mol-% Hexamethylenterephthalamid-(6T)- und 15 bis 40 Mol-% Hexamethylenisophthalamid-(6I)-Einheiten, das zusätzlich 5 - 15 Gew.-% Caprolactam enthält.

Das teilaromatische, teilkristalline Polyamid (A1) hat eine Lösungsviskosität ηᵣₑₗ, gemessen nach DIN EN ISO 307 an Lösungen von 0,5 g Polymer in 100 ml m-Kresol bei einer Temperatur von 20 °C, von höchstens 2,6, bevorzugt von höchstens 2,3, insbesondere von höchstens 2,0. Bevorzugt werden Polyamide (A1) mit einer Lösungsviskosität ηᵣₑₗ im Bereich von 1,45 bis 2,3, insbesondere im Bereich von 1,5 bis 2,0 oder 1,5 bis 1,8.

Die erfindungsgemäßen Polyamide (A1) können auf üblichen Polykondensationsanlagen über die Prozessfolge Vorkondensat und Nachkondensation hergestellt werden. Für die Polykondensation werden zur Regelung der Viskosität bevorzugt die beschriebenen Kettenregler eingesetzt. Zusätzlich kann die Viskosität durch den Einsatz eines Diamin- oder Disäureüberschusses eingestellt werden.

### Komponente (A2)

Bei der Komponente (A2) handelt es sich um caprolactamhaltige Polyamide mit einem Gehalt an Caprolactam von wenigstens 50 Gew.-%, bevorzugt von mindestens 60 Gew.-% und insbesondere bevorzugt von mindesten 70 Gew.-%. Insbesondere handelt es sich bei (A2) um Polyamid PA 6.

Für den Fall, dass es sich bei der Komponente (A2) um ein Copolymer handelt, sind bevorzugte Comonomere für (A2), die neben Caprolactam eingesetzt werden, zum einen Kombinationen von Diaminen und Dicarbonsäuren, die bevorzugt äquimolar oder nahezu äquimolar eingesetzt werden, und zum anderen Lactame und Aminocarbonsäuren.

Geeignete Diamine sind insbesondere verzweigte oder lineare aliphatische Diamine mit 4 bis 18 C-Atomen. Geeignete Dicarbonsäuren sind aliphatische, cycloaliphatische oder aromatische Dicarbonsäuren mit 6 bis 36 Kohlenstoffatomen.

Gemäß einer ersten bevorzugten Ausführungsform handelt es sich beim C4-C18-Diamin um ein Diamin ausgewählt aus der Gruppe 1,4-Butandiamin, 1,5-Pentandiamin, 2-Methylpentandiamin, 1,6-Hexandiamin, 1,7-Heptandiamink 1,8-Octandiamin, 1,9-Nonandiamin, Methyl-1,8-Octandiamin, 2,2,4-Trimethylhexandiamin, 2,4,4-Trimethylhexandiamin, 1,10-Decandiamin, 1,11-Undecandiamin, 1,12-Dodecandiamin, 1,13-Tridecandiamin, 1,14-Tetradecandiamin, 1,15-Pentadecandiamin, 1,16-Hexadecandiamin, 1,17-Heptadecandiamin, 1,18-Octadecandiamim, 4,4'-Diaminodicyclohexylmethan (PACM), 2,2-(4,4'-Diaminodicyclohexyl)propan (PACP), 3,3'-Dimethyl-4,4'-diaminodicyclohexylmethan, (MACM)m-Xylylendiamin, p-Xylylendiamin oder eine Mischung derartiger Diamine, wobei 1,6-Hexandiamin, 1,10-Decandiamin, 1,12-Dodecandiamin, oder eine Mischung derartiger Diamine, wobei 1,6-Hexandiamin und 1,10-Decandiamin bevorzugt werden, und 1,6-Hexandiamin alleine besonders bevorzugt ist.

Geeignete aliphatische Dicarbonsäuren sind Adipinsäure, Korksäure, Azelainsäure, Sebazinsäure, Undecandisäure, Dodecandisäure, Brassylsäure, Tetradecandisäure, Pentadecandisäure, Hexadecandisäure, Octadecandisäure und Dimerfettsäure (C36). Geeignete cycloaliphatische Dicarbonsäuren sind die cis- und/oder trans-Cyclohexan-1,4-dicarbonsäure und/oder cis- und/oder trans-Cyolohexan-1,3-dicarbonsäure (CHDA). Geeignete aromatische Dicarbonsäuren sind Terephthalsäure, Isophthalsäure und Naphthalindicarbonsäure. Unter den Dicarbonsäuren werden Adipinsäure, Sebazinsäure, Dodecandisäure, Isophthalsäure, Terephthalsäure oder eine Mischung derartiger Dicarbonsäuren, bevorzugt Adipinsäure und Terephthalsäure und besonders Adipinsäure alleine bevorzugt.

Weitere bevorzugte Comonomere für das Polyamid (A2) sind gegebenenfalls Lactame oder Aminocarbonsäuren mit 7 bis 12 Kohlenstoffatomen, wobei Laurinlactam und Aminolaurinsäure besonders bevorzugt werden.

Besonders bevorzugte Polyamide des Typs (A2) sind Copolyamide, hergestellt aus den Monomeren Caprolactam und Laurinlactam bzw. Caprolactam, Hexandiamin und Adipinsäure bzw. Caprolactam, Hexandiamin und Terephthalsäure, also Copolyamide PA 6/12 bzw. PA 6/66 bzw. PA 6/6T bzw. PA6/12/66 bzw. PA6/66/610, deren Caprolactamgehalt mindestens 50 Gew.-% beträgt.

Das caprolactamhaltige Polyamid (A2) hat eine Lösungsviskosität ηᵣₑₗ, gemessen nach DIN EN ISO 307 an Lösungen von 0,5 g Polymer gelöst in 100 ml m-Kresol bei einer Temperatur von 20 °C, im Bereich von 1,6 bis 3,0, bevorzugt im Bereich von 1,7 bis 2,5, insbesondere im Bereich von 1,8 bis 2,2.

### Komponente (B)

Gemäß einer weiteren bevorzugten Ausführungsform der vorgeschlagenen Polyamid-Formmasse handelt es sich bei den Füll- und Verstärkungsmitteln der Komponente (B) um Fasern, insbesondere um Glas- und/oder Kohlenstofffasern, wobei bevorzugt Kurzfasern, bevorzugt mit einer Länge im Bereich von 2 bis 50 mm und einem Durchmesser von 5 bis 40 µm und/oder Endlosfasern (Rovings) eingesetzt werden und wobei insbesondere Fasern mit kreisförmiger und/oder nicht-kreisförmiger Querschnittsfläche eingesetzt werden, wobei im letzteren Fall das Abmessungsverhältnis von der Hauptquerschnittsachse zur Nebenquerschnittsachse insbesondere > 2 ist, bevorzugt im Bereich von 2 bis 8 und besonders bevorzugt im Bereich von 3 bis 5 liegt.

Dabei werden Glasfasern mit nicht-kreisförmiger Querschnittsfläche und einem Abmessungsverhältnis von der Hauptquerschnittsachse zur Nebenquerschnittsachse von mehr als 2, bevorzugt von 2 bis 8, insbesondere von 3 bis 5, bevorzugt eingesetzt. Diese sogenannten flachen Glasfasern weisen eine ovale, elliptische, mit Einschnürung(en) versehene elliptische (sog. "Kokon"- oder "cocoon"-Faser), rechteckige oder nahezu rechteckige Querschnittsfläche auf.

Die erfindungsgemäßen flachen Glasfasern mit nicht-kreisförmiger Querschnittsfläche werden bevorzugt als Kurzglasfaser (Schnittglas mit einer Länge von 0,2 bis 20 mm, bevorzugt von 2 bis 12 mm) eingesetzt.

Ein weiteres bevorzugtes Merkmal der eingesetzten flachen Glasfasern besteht darin, dass die Länge der Hauptquerschnittsachse bevorzugt im Bereich von 6 bis 40 µm, insbesondere im Bereich von 15 bis 30 µm, und die Länge der Nebenquerschnittsachse im Bereich von 3 bis 20 µm, insbesondere im Bereich von 4 bis 10 µm liegt.

Zur Verstärkung der erfindungsgemäßen Formmassen können auch Mischungen von Glasfasern mit kreisförmigem und nicht-kreisförmigem Querschnitt verwendet werden, wobei der Anteil an flachen Glasfasern wie oben definiert bevorzugt überwiegt, d.h. mehr als 50 Gew.-% der Gesamtmasse der Fasern ausmacht.

Werden verstärkte Formmassen mit guter Fließfähigkeit und guter Oberflächenqualität angestrebt, insbesondere in Kombination mit Flammschutzmitteln, dann bestehen die Verstärkungsfasern bevorzugt überwiegend (d.h. z.B. mehr als 80 Gew.-% oder sogar mehr als 90 Gew.-%) aus flachen Glasfasern oder sogar ausschließlich aus flachen Glasfasern.

Die erfindungsgemäß als Roving (Füllstoffkomponente (B)) eingesetzten Glasfasern weisen einen Durchmesser von 10 bis 20 µm, bevorzugt von 12 bis 18 µm auf, wobei der Querschnitt der Glasfasern rund, oval, elliptisch, nahezu rechteckig oder rechteckig sein kann. Besonders bevorzugt werden sogenannte flache Glasfasern mit einem Verhältnis der Querschnittsachsen von 2 bis 5. Insbesondere werden erfindungsgemäß E-Glasfasern verwendet. Es können aber auch alle anderen Glasfasersorten, wie z.B. A-, C-, D-, M, S-, R-Glasfasern oder beliebige Mischungen davon oder Mischungen mit E-Glasfasern eingesetzt werden.

Bei langfaserverstärkten Formmassen ergeben sich höhere Zähigkeiten und somit noch metallähnlichere Eigenschaften, wenn anstatt der üblichen Endlosglasfaser mit einem Durchmesser von 15 bis 19 µm, solche mit einem Durchmesser von 10 bis 14 µm, insbesondere solche mit einem Durchmesser von 10 bis 12 µm verwendet werden.

Die erfindungsgemäßen Polyamidformmassen können durch die bekannten Verfahren zur Herstellung von langfaserverstärktem Stäbchengranulat hergestellt werden, insbesondere durch Pultrusionsverfahren, bei denen der endlose Faserstrang (Roving) mit der Polymerschmelze vollständig durchtränkt und anschließend abgekühlt und geschnitten wird.

Das auf diese Art und Weise erhaltene langfaserverstärkte Stäbchengranulat, das bevorzugt eine Granulatlänge von 3 bis 25 mm, insbesondere von 4 bis 12 mm aufweist, kann mit den üblichen Verarbeitungsverfahren, wie z. B. Spritzgießen oder Pressen, zu Formteilen weiterverarbeitet werden.

Die beim Pultrusionsverfahren eingesetzten Endlos-Kohlefasern weisen einen Durchmesser von 5 bis 10 µm, bevorzugt von 6 bis 8 µm auf. Zur Verbesserung der Matrixanbindung und des Faserhandlings können die Fasern mit chemisch unterschiedlichen Schichten, wie sie für Glas- und Kohlefasern im Stand der Technik bekannt sind, beschichtet sein.

Die Glasfaser selbst, unabhängig von der Form der Querschnittsfläche und Länge der Faser, kann dabei ausgewählt sein aus der Gruppe aus E-Glasfasern, A-Glasfasern, C-Glasfasern, D-Glasfasern, M-Glasfasern, S-Glasfasern und/oder R-Glasfasern, wobei E-Glasfasern bevorzugt sind.

Bei den Füll- und Verstärkungsmitteln der Komponente (B) kann es sich auch um teilchenförmige Füllstoffe handeln, oder eine Mischung aus Fasern und teilchenförmigen Füllstoffen. Dabei können als teilchenförmige Füllstoffe vorzugsweise mineralische Füllstoffe auf Basis von natürlichen und/oder synthetischen Schichtsilikaten, Talk, Glimmer, Silikat, Quarz, Titandioxid, Wollastonit, Kaolin, amorphen Kieselsäuren, Magnesiumcarbonat, Magnesiumhydroxid, Kreide, Kalk, Feldspat, Bariumsulfat, Voll- oder Hohl-Glaskugeln oder gemahlenem Glas, dauerhaft magnetische bzw. magnetisierbare Metallverbindungen und/oder Legierungen respektive Mischungen eingesetzt werden. Die Füllstoffe können auch oberflächenbehandelt sein. Als Schichtsilikate können in den erfindungsgemäßen Formmassen z.B. Kaoline, Serpentine, Talkum, Glimmer, Vermiculite, Illite, Smectite, Montmorillonit, Hectorit, Doppelhydroxyde oder Gemische davon eingesetzt werden. Die Schichtsilikate können oberflächenbehandelt, aber auch unbehandelt sein.

### Komponente (C)

Als Komponente (C) enthalten die erfindungsgemäßen thermoplastischen Formmassen 0,01 bis 3 Gew.-%, bevorzugt 0,02 bis 2 Gew.-%, besonders bevorzugt 0,1 bis 1,5 Gew.-% mindestens eines Wärmestabilisators.

In einer bevorzugten Ausführungsform sind die Wärmestabilisatoren ausgewählt aus der Gruppe bestehend aus
- Verbindungen des ein- oder zweiwertigen Kupfers, z.B. Salze des ein- oder zweiwertigen Kupfers mit anorganischen oder organischen Säuren oder ein- oder zweiwertigen Phenolen, die Oxide des ein- oder zweiwertigen Kupfers, oder die Komplexverbindungen von Kupfersalzen mit Ammoniak, Aminen, Amiden, Lactamen, Cyaniden oder Phosphinen, bevorzugt Cu(I)- oder Cu(II)-Salze der Halogenwasserstoffsäuren, der Cyanwasserstoffsäuren oder die Kupfersalze der aliphatischen Carbonsäuren. Besonders bevorzugt sind die einwertigen Kupferverbindungen CuCl, CuBr, CuI, CuCN und Cu₂O, sowie die zweiwertigen Kupferverbindungen CuCl₂, CuSO₄, CuO, Kupfer(II)acetat oder Kupfer(II)stearat. Sofern eine Kupferverbindung verwendet wird, beträgt vorzugsweise die Menge an Kupfer 0,003 bis 0,5, insbesondere 0,005 bis 0,3 und besonders bevorzugt 0,01 bis 0,2 Gew.-%, bezogen auf die Summe der Komponenten (A) bis (D).
   Die Kupferverbindungen sind handelsüblich bzw. ihre Herstellung ist dem Fachmann bekannt. Die Kupferverbindung kann als solche oder in Form von Konzentraten eingesetzt werden. Unter Konzentrat ist dabei ein Polymer, vorzugsweise gleicher chemischer Natur wie Komponente (A1) oder (A2), zu verstehen, welches das Kupfersalz in hoher Konzentration enthält. Der Einsatz von Konzentraten ist ein übliches Verfahren und wird besonders häufig dann angewandt, wenn sehr geringe Mengen eines Einsatzstoffes zu dosieren sind. Vorteilhafterweise werden die Kupferverbindungen in Kombination mit weiteren Metallhalogeniden, insbesondere Alkalihalogeniden, wie Nal, KI, NaBr, KBr, eingesetzt, wobei das molare Verhältnis von Metallhalogenid zu Kupferhalogenid 0,5 bis 20, bevorzugt 1 bis 10 und besonders bevorzugt 3 bis 7 beträgt.
- Stabilisatoren auf Basis sekundärer aromatischer Amine, wobei diese Stabilisatoren vorzugsweise in einer Menge von 0,2 bis 2, bevorzugt von 0,2 bis 1,5 Gew.-% vorliegen,
- Stabilisatoren auf Basis sterisch gehinderter Phenole, wobei diese Stabilisatoren vorzugsweise in einer Menge von 0,1 bis 1,5, bevorzugt von 0,2 bis 1 Gew.-% vorliegen, und
- Phosphiten und Phosphoniten, sowie
- Mischungen der vorstehend genannten Stabilisatoren.

Besonders bevorzugte Beispiele für erfindungsgemäß einsetzbare Stabilisatoren auf Basis sekundärer aromatischer Amine sind Addukte aus Phenylendiamin mit Aceton (Naugard A), Addukte aus Phenylendiamin mit Linolen, Naugard 445, N,N'-Dinaphthyl-p-phenylendiamin, N-Phenyl-N'-cyclohexyl-p-phenylendiamin oder Mischungen von zwei oder mehreren davon

Bevorzugte Beispiele für erfindungsgemäß einsetzbare Stabilisatoren auf Basis sterisch gehinderter Phenole sind N,N'-Hexamethylen-bis-3-(3,5-di-tert-butyl-4-hydroxyphenyl)-propionamid, Bis-(3,3-bis-(4'-hydroxy-3'-tert-butylphenyl)-butansäure)-glykolester, 2,1'-Thioethylbis-(3-(3,5-di.tert-butyl-4-hydroxyphenyl)-propionat, 4-4'-Butyliden-bis-(3-methyl-6-tert.-butylphenol), Triethylenglykol-3-(3-tert-butyl-4-hydroxy-5-methylphenyl)-propionat oder Mischungen von zweien oder mehreren dieser Stabilisatoren.

Bevorzugte Phosphite und Phosphonite sind Triphenylphosphit, Diphenylalkylphosphit, Phenyldialkylphosphit, Tris(nonylphenyl)phosphit, Trilaurylphosphit, Trioctadecylphosphit, Distearylphentaerythritoldiphosphit, Tris(2,4-di-tert-butylphenyl)phosphit, Diisodecylpentaerythritoldiphosphit, Bis(2,4-di-tert-butylphenyl)pentaerythritoldiphosphit, Bis(2,6-di-tert-butyl-4-methylphenyl)-pentaerythritoldiphosphit, Diisodecyloxypentaerythritoldiphosphit, Bis(2,4-di-tert-butyl-6-methylphenyl)pentaerythritoldiphosphit, Bis(2,4,6-tris-(tert-butylphenyl))pentaerythritol-diphosphit, Tristearylsorbitoltriphosphit, Tetrakis-(2,4-di-tert-butylphenyl)-4,4'-biphenylendiphosphonit, -6-Isooctyloxy-2,4,8,10-tetra-tert-butyl-12H-dibenz-[d,g]-1,3,2-dioxaphosphocin, 6-Fluoro-2,4,8,10-tetra-tert-butyl- 12-methyl-dibenz[d,g]-1,3,2-dioxaphosphocin, Bis(2,4-di-tert- butyl-6-methylphenyl)methylphosphit und Bis(2,4-di-tert-butyl-6-methylphenyl)ethylphosphit. Insbesondere werden bevorzugt Tris[2-tert-butyl-4-thio(2'-methyl-4'-hydroxy-5'-tert-butyl)-phenyl-5-methyl]phenyl-phosphit und Tris(2,4-di-tert-butylphenyl)phosphit (Hostanox^{®} PAR24: Handelsprodukt der Firma Clariant, Basel).

Eine bevorzugte Ausführungsform des Wärmestabilisators besteht in der Kombination von organischen Hitzestabilisatoren (insbesondere Hostanox PAR 24 und Irganox 1010), einem Bisphenol A basiertem Epoxid (insbesondere Epikote 1001) und einer Kupferstabilisierung auf Basis von CuI und KI. Eine kommerziell erhältliche Stabilisatormischung, bestehend aus organischen Stabilisatoren und Epoxiden ist beispielsweise Irgatec NC66 von Ciba Spez. GmbH. Insbesondere bevorzugt wird eine Wärmestabilisierung ausschließlich auf Basis von CuI und KI. Neben dem Zusatz von Kupfer oder Kupferverbindungen wird die Verwendung weiterer Übergangsmetallverbindungen, insbesondere Metallsalze oder Metalloxide der Gruppe VB, VIB, VIIB oder VIIIB des Periodensystems ausgeschlossen. Darüber hinaus werden der erfindungsgemäßen Formmasse bevorzugt keine Übergangsmetalle der Gruppe VB, VIB, VIIB oder VIIIB des Periodensystems, wie z.B. Eisen- oder Stahlpulver, zugesetzt.

### Komponente (D)

Die erfindungsgemäßen Formmassen können weitere Zusatzstoffe (D), wie z. B. aus der Gruppe der Lichtschutzmittel, UV-Stabilisatoren, UV-Absorber oder UV-Blocker, Gleitmittel, Farbstoffe, Nukleierungsmittel, metallische Pigmente, Antistatika, Leitfähigkeitsadditive, Entformungsmittel, optischen Aufheller, oder Gemische der genannten Zusatzstoffe enthalten. Als Antistatika können in den erfindungsgemäßen Formmassen z. B. Ruß und/oder Kohlenstoffnanoröhrchen eingesetzt werden. Die Verwendung von Ruß kann aber auch zur Verbesserung der Schwarzfärbung der Formmasse dienen. Die Formmasse kann jedoch auch frei von metallischen Pigmenten sein.

Desweiteren betrifft die vorliegende Erfindung ein Verfahren zur Herstellung von derartigen Polyamid-Formmassen. Sie betrifft zudem Formkörper, die unter Verwendung von derartigen Polyamid-Formmassen hergestellt werden.

### Anwendungen

Zudem betrifft die Erfindung Verwendungen von Formteilen, welche wenigstens teilweise aus derartigen Polyamid-Formmassen bestehen.

Für den Automobilbereich seien beispielhaft genannt: Zylinderkopfhauben, Motorabdeckungen, Gehäuse für Ladeluftkühler, Ladeluftkühlerklappen, Ansaugrohre, insbesondere Ansaugkrümmer, Konnektoren, Zahnräder, Lüfterräder, Kühlwasserkästen, Gehäuse oder Gehäuseteile für Wärmetauscher, Kühlmittelkühler, Ladeluftkühler, Thermostat, Wasserpumpe, Heizkörper, Befestigungsteile. Im Bereich Elektro/Elektronik sind solche Verwendungen beispielsweise Teile von Leiterplatten, Gehäusen, Folien, Leitungen, Schaltern, Verteilern, Relais, Widerstände, Kondensatoren, Spulen, Lampen, Dioden, LEDs, Transistoren, Konnektoren, Regler, Speicher und Sensoren. Weitere Ausführungsformen sind in den abhängigen Ansprüchen angegeben.

### BESCHREIBUNG BEVORZUGTER AUSFÜHRUNGSFORMEN

Die Erfindung soll nachfolgend unter Verwendung von spezifischen Ausführungsbeispielen beschrieben und mit den weniger leistungsfähigen Systemen nach dem Stand der Technik verglichen werden. Die in der Folge angegebenen Ausführungsbeispiele dienen zur Stützung der Erfindung und zum Nachweis der Unterschiede zum Stand der Technik; sie sollen aber nicht zur Einschränkung des allgemeinen Gegenstandes der Erfindung, wie er in den Patentansprüchen definiert ist, hinzugezogen werden.

### Beispiele B1 bis B5 und Vergleichsbeispiele V1 bis V9:

Die Formmassen der Zusammensetzungen in Tabelle 1 und 2 werden auf einem Zweiwellenextruder der Fa. Werner u. Pfleiderer, Typ ZSK25, hergestellt. Die Polyamid-Granulate werden zusammen mit den Additiven in die Einzugszone dosiert, während die Glasfaser über Sidefeeder 3 Gehäuseeinheiten vor der Düse in die Polymerschmelze dosiert wird. Die Gehäusetemperatur wurde als aufsteigendes Profil bis 330 °C eingestellt. Bei 150 bis 200 rpm wurden 10 kg Durchsatz erreicht. Nach Abkühlen der Stränge im Wasserbad wurden nach Granulierung und Trocknung bei 120 °C für 24 Stunden die Granulateigenschaften gemessen.

Anschließend werden die Compounds mit einer Spritzgussmaschine Arburg Allrounder 320-210-750 bei Zylindertemperaturen von 325 °C bis 340 °C der Zonen 1 bis 4 und einer Werkzeugtemperatur von 130 °C zu ISO-Prüfkörpern verspritzt.

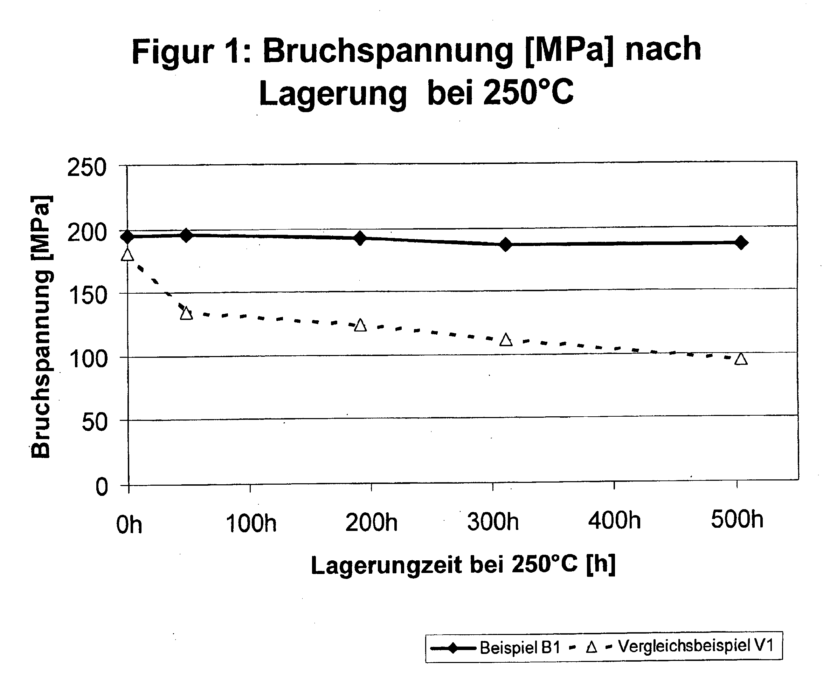

Figur 1 zeigt das Ergebnis der Wärmelagerung bei 250 °C. Die Bruchspannung der Formkörper, hergestellt aus der erfindungsgemässen Formmasse (B1), bleibt über eine Lagerzeit von 500 Stunden nahezu konstant, während die Bruchspannung der Formkörper, hergestellt aus der Formmasse des Vergleichsbeispiels V1, nach 500 Stunden Lagerung bei 250 °C auf 50 % des Ausgangswertes abfällt.

### Eingesetzte Polyamide:

PA 6T/66: Copolyamid aus den Monomeren Terephthalsäure, Adipinsäure und 1,6-Hexandiamin mit einem Molverhältnis von Terephthalsäure zu Adipinsäure von 55 zu 45 und einer relativen Lösungsviskosität von 1.60.

PA 6: Grilon A28 mit einer relativen Lösungsviskosität von 1,86 (EMS-CHEMIE AG).

PA 6/12: Copolyamid aus den Monomeren Caprolactam und Laurinlactam mit einen Caprolactamgehalt von 75 Gew.-% und einer relativen Viskosität von 1,90.

PA 1010: Homopolyamid aus den Monomeren 1,10-Decandiamin und Sebazinsäure mit einer relativen Viskosität von 1,95.

PA 46: Homopolyamid aus den Monomeren 1,4-Butandiamin und Adipinsäure mit einer relativen Viskosität von 1,88.

**Tabelle 1**

| | Einheit | **V1** | **V2** | **V3** | **V4** | **V5** | **V6** | **V7** | **V8** | **V9** |
|---|---|---|---|---|---|---|---|---|---|---|
| **Zusammensetzung** | | | | | | | | | | |
| PA 6T/66 | Gew.-% | 68.28 | 67.78 | 64.28 | 60.28 | 54.28 | 44.28 | 50.56 | 51.28 | |
| PA 46 | Gew.-% | | | | | | | | | 50.78 |
| PA 6 | Gew.-% | | | 4 | 8.00 | 14 | 24 | 16.90 | | 17 |
| PA 1010 | Gew.% | | | | | | | | 17.0 | |
| CLM-Gehalt bezogen auf Gesamt-Polyamid | % | 0.0 | 0.0 | 5.9 | 11.7 | 20.5 | 35.1 | 25.0 | 0.0 | 25.1 |
| Kaolin | Gew.-% | 0.28 | 0.28 | 0.28 | 0.28 | 0.28 | 0.28 | | 0.28 | 0.28 |
| Kupferstabilisator | Gew.-% | 0.24 | 0.24 | 0.24 | 0.24 | 0.24 | 0.24 | 0.74 | 0.24 | 0.74 |
| Eisenoxid (Fe₂O₃) | Gew.-% | | 0.5 | | | | | 0.60 | | |
| Glasfaser | Gew.% | 30.0 | 30.0 | 30.0 | 30.0 | 30.0 | 30.0 | 30.0 | 30.0 | 30.0 |
| Schwarz-Masterbatch | Gew.-% | 1.20 | 1.20 | 1.20 | 1.20 | 1.20 | 1.20 | 1.20 | 1.20 | 1.20 |

| **Hitzelagerung 180°C / 2500 Stunden** | | | | | | | | | | |
|---|---|---|---|---|---|---|---|---|---|---|
| Zug-E-Modul | MPa | 11020 | 10900 | 10790 | 10320 | 10600 | 10700 | 11100 | 10900 | n.b. |
| Bruchfestigkeit | MPa | 91 | 90 | 87 | 102 | 110 | 135 | 132 | 99 | n.b |
| Erhalt der Bruchfestigkeit | % | 50 | 53 | 47 | 60 | 65 | 75 | 69 | 52 | n.b. |
| Bruchdehnung | % | 0.9 | 0.9 | 1.1 | 1.1 | 1.3 | 1.7 | 1.5 | 1.0 | n.b |
| Erhalt der Bruchdehnung | % | 39 | 41 | 41 | 44 | 52 | 59 | 58 | 38 | n.b |

| **Hitzelagerung 220°C / 2500 Stunden** | | | | | | | | | | |
|---|---|---|---|---|---|---|---|---|---|---|
| Zug-E-Modul | MPa | vv | vv | 6730 | 9300 | 10800 | 10950 | 11300 | vv | vv |
| Bruchfestigkeit | MPa | vv | vv | 32 | 67 | 80 | 130 | 120 | vv | vv |
| Erhalt der Bruchfestigkeit | % | 0 | 0 | 17 | 40 | 27 | 72 | 63 | 0 | 0 |
| Bruchdehnung | % | vv | vv | 0.6 | 0.8 | 0.8 | 1.5 | 1.2 | vv | vv |
| Erhalt der Bruchdehung | % | 0 | 0 | 26 | 30 | 32 | 52 | 46 | 0 | 0 |

| **Mechanische Eigenschaften bei 23°C** | | | | | | | | | | |
|---|---|---|---|---|---|---|---|---|---|---|
| Zug-E-Modul | MPa | 10570 | 10000 | 10600 | 9440 | 10200 | 9980 | 10600 | 10770 | 8100 |
| Bruchfestigkeit | MPa | 182 | 169 | 185 | 169 | 170 | 180 | 190 | 189 | 158 |
| Bruchdehnung | % | 2.3 | 2.2 | 2.7 | 2.5 | 2.5 | 2.9 | 2.6 | 2.6 | 3.1 |
| Schlagzähigkeit | kJ/m² | 51 | 33 | 45 | 40 | 45 | 60 | 48 | 53 | 59 |
| Kerbschlagzähigkeit | kJ/m² | 8.4 | 4.8 | 8.0 | 7.6 | 8.0 | 8.8 | 7.8 | 8.7 | 7.9 |

| **Mechanische Eigenschaften bei 220°C und Wärmeformbeständigkeit HDT A / HDT C** | | | | | | | | | | |
|---|---|---|---|---|---|---|---|---|---|---|
| Zug-E-Modul | MPa | 2650 | n.b | 2600 | 1520 | n.b | n.b | n.b | n.b | n.b |
| Bruchfestigkeit | MPa | 58 | n.b. | 54 | 30 | n.b. | n.b. | n.b. | n.b. | n.b. |
| Bruchdehnung | % | 9.1 | n.b. | 9.0 | 8.0 | n.b. | n.b. | n.b. | n.b. | n.b. |
| HDT A | °C | >280 | >280 | >280 | 280 | 262 | 215 | 256 | 197 | >280 |
| HDT C | °C | 178 | 180 | 176 | 174 | 172 | 135 | 170 | 133 | n.b. |

**Tabelle 1: Zusammensetzung und Eigenschaften der Compounds der Vergleichsbeispiele V1 bis V9; alle Eigenschaften wurden im trocknen Zustand gemessen. (Abkürzungen: vv=völlig versprödet, n.b.=nicht bestimmt)**

| | |
|---|---|
| Kaolin: | Aminosilan beschichtetes, kalziniertes Aluminiumsilikat |
| Schwarz-Masterbatch: | Masterbatch mit 25 Gew.-% Ruß in Polyamid 66. |
| Kupferstabilisator: | Mischung aus 14.3 Gew.-% Kupfer(I)jodid und 85.7 Gew.-% Kaliumjodid/Calciumstearat (98:2). |
| Irgatec NC 66: | Wärmestabilisatorgemisch von Ciba Spez. GmbH |
| Glasfaser: | Vetrotex 995: Schnittglasfasern mit einer Länge von 4.5 mm und einem Durchmesser von 10 µm (kreisförmiger Querschnitt) von Owens Corning Fiberglas |
| Eisenoxid | Sicotrans Red, K2915, D₅₀=400nm (BASF) |

**Tabelle 2**

| | Einheit | **B1** | **B2** | **B3** | **B4** | **B5** |
|---|---|---|---|---|---|---|
| **Zusammensetzung** | | | | | | |
| PA 6T/66 | Gew.-% | 51.28 | 50.78 | 47.78 | 51.28 | 47.78 |
| PA 6 | Gew.-% | 17.00 | 17.00 | 20 | 16 | |
| PA 6/12 | Gew.-% | | | | | 20.0 |
| CLM-Gehalt bezogen auf Gesamt-Polyamid | % | 24.9 | 25.1 | 29.5 | 23.4 | 22.1 |
| Kaolin | Gew.-% | 0.28 | 0.28 | 0.28 | 0.28 | 0.28 |
| Kupferstabilisator | Gew.-% | 0.24 | 0.24 | 0.24 | 0.24 | 0.24 |
| Irgatec NC 66 | Gew.-% | | 0.5 | 0.5 | 1.0 | 0.5 |
| Glasfaser | Gew.-% | 30.0 | 30.0 | 30.0 | 30.0 | 30.0 |
| Schwarz-Masterbatch | Gew.-% | 1.20 | 1.20 | 1.20 | 1.20 | 1.20 |

| **Hitzelagerung 180°C / 2500 Stunden** | | | | | | |
|---|---|---|---|---|---|---|
| Zug-E-Modul | MPa | 11060 | 11140 | 10980 | 11150 | 10560 |
| Bruchfestigkeit | MPa | 135 | 138 | 140 | 130 | 130 |
| Erhalt der Bruchfestigkeit | % | 69 | 70 | 72 | 67 | 69 |
| Bruchdehnung | % | 1.5 | 1.5 | 1.7 | 1.6 | 1.6 |
| Erhalt der Bruchdehnung | % | 58 | 54 | 61 | 57 | 62 |

| **Hitzelagerung 220°C / 2500 Stunden** | | | | | | |
|---|---|---|---|---|---|---|
| Zug-E-Modul | MPa | 11450 | 11300 | 11250 | 11350 | 10440 |
| Bruchfestigkeit | MPa | 130 | 126 | 135 | 125 | 105 |
| Erhalt der Bruchfestigkeit | % | 66 | 64 | 69 | 64 | 56 |
| Bruchdehnung | % | 1.3 | 1.3 | 1.4 | 1.3 | 1.1 |
| Erhalt der Bruchdehnung | % | 50 | 46 | 50 | 46 | 42 |

| **Mechanische Eigenschaften bei 23°C** | | | | | | |
|---|---|---|---|---|---|---|
| Zug-E-Modul | MPa | 10550 | 10530 | 10300 | 10560 | 10600 |
| Bruchfestigkeit | MPa | 197 | 197 | 195 | 195 | 189 |
| Bruchdehnung | % | 2.6 | 2.8 | 2.8 | 2.8 | 2.6 |
| Schlagzähigkeit | kJ/m² | 49 | 47 | 50 | 45 | 47 |
| Kerbschlagzähigkeit | kJ/m² | 8.2 | 8.2 | 8.3 | 8.0 | 8.8 |

| **Mechanische Eigenschaften bei 220°C und Wärmeformbeständigkeit HDT A / HDT C** | | | | | | |
|---|---|---|---|---|---|---|
| Zug-E-Modul | MPa | 2500 | 2540 | n.b. | 2600 | n.b. |
| Bruchfestigkeit | MPa | 41 | 43 | n.b. | 48 | n.b. |
| Bruchdehnung | % | 9.7 | 9.2 | n.b. | 9.5 | n.b. |
| HDT A | °C | 258 | 255 | 245 | 260 | 244 |
| HDT C | °C | 170 | 169 | 160 | 172 | 152 |

Tabelle 2: Zusammensetzung und Eigenschaften der Compounds der Beispiele B1 bis B5; alle Eigenschaften wurden im trocknen Zustand gemessen. Abkürzungen: vv=völlig versprödet, n.b.=nicht bestimmt)

### Diskussion der Ergebnisse

Anhand der Tabelle 2 wird dargelegt, dass die Zugabe caprolactamhaltiger Polyamide eine Verbesserung der Wärmealterungsbeständigkeit, insbesondere bei hohen Temperaturen (220 °C) bewirkt. Die mechanischen Grundeigenschaften werden dabei gehalten. Auch die Wärmeformbeständigkeit, ausgedrückt durch den HDT A, bleibt oberhalb 240 °C.

Demgegenüber zeigt Tabelle 1, dass zu geringe Mengen PA6 (V1 - V5) den gewünschten Effekt nicht erzielen, was an der geringen Bruchdehnung von kleiner 1 % nach Lagerung (bzw. an der aufgrund der vollständigen Versprödung nicht mehr messbaren Bruchdehnung) bei 220 °C zu erkennen ist. Höhere Caprolactamanteile (V6) erzielen zwar die gewünschte Wärmealterungsbeständigkeit, erreichen aber keine ausreichende Wärmeformbeständigkeit. Auch die Verwendung nichtcaprolactamhaltiger Polyamide als Komponente (A2) (V8) oder aliphatischer Polyamide als Komponente (A1) (V9) führt nicht zu zufriedenstellenden Produkten. Eine zusätzliche Stabilisierung durch Eisenoxid (V7) führt bei den erfindungsgemäßen Blends aus teilaromatischen Polyamiden und caprolactamhaltigen Polyamiden nicht zu einer verbesserten Wärmealterungsbeständigkeit. Unter den gewählten Bedingungen wurden sogar geringfügig schlechtere Wärmealterungsbeständigkeit beobachtet. Auch die weiteren eisenoxidhaltigen Polyamidblends weisen gegenüber den erfindungsgemäßen Polyamidblends schlechtere mechanische Eigenschaften auf.

Insofern lässt sich jedoch die Lehre der WO 2006/074934 A1, die in rein aliphatischen Polyamidblends lehrt, dass lediglich eine Kombination aus kupferhaltigen und eisenhaltigen Stabilisatoren zu einer deutlichen Verbesserung der mechanischen Eigenschaften nach Wärmelagerung führt, überraschenderweise, wie von den Beispielen dargelegt, nicht auf teilaromatische Polyamid-Zusammensetzungen übertragen.

Die Messungen wurden nach folgenden Normen und an folgenden Prüfkörpern durchgeführt.

### Thermisches Verhalten:

Schmelzpunkt, Schmelzenthalpie und Glasübergangstemperatur (Tg):
ISO-Norm 11357-11-2
Granulat

Die Differential Scanning Calorimetry (DSC) wurde mit einer Aufheizrate von 20 °C/min durchgeführt. Für die Glasumwandlungstemperatur (Tg) wird die Temperatur für den Onset angegeben.

### Relative Viskosität:

Die relative Viskosität (ηᵣₑₗ) wurde bestimmt nach DIN EN ISO 307 an Lösungen von 0,5 g Polymer gelöst in 100 ml m-Kresol bei einer Temperatur von 20°C.

Zug-E-Modul, Bruchfestigkeit und Bruchdehnung:
ISO 527 mit einer Zuggeschwindigkeit von 5 mm/min ISO-Zugstab, Norm: ISO/CD 3167, Typ A1, 170 x 20/10 x 4 mm, Temperatur 23 °C

Schlagzähigkeit nach Charpy:
ISO 179/*eU
ISO-Prüfstab, Norm: ISO/CD 3167, Typ B1, 80 x 10 x 4 mm, Temperatur 23 °C
* 1 = nicht instrumentiert, 2 = instrumentiert

Kerbschlagzähigkeit nach Charpy:
ISO 179/*eA
ISO-Prüfstab, Norm: ISO/CD 3167, Typ B1, 80 x 10 x 4 mm, Temperatur 23 °C
* 1 = nicht instrumentiert, 2 = instrumentiert

HDT A (1,8 MPa) und HDT C (8 MPa) :
ISO 75
ISO-Schlagstab 80x10x4 mm
Hitzelagerung bei 180°C/220°C/250°C

Die Hitzelagerung wurde an ISO-Zugstäben (Norm: ISO/CD 3167, Typ A1, 170 x 20/10 x 4 mm) in einem Umluftofen (Binder FD115) nach DIN 12880 (Klasse 2.0) bei einer Temperatur von 180°C, 220°C bzw. 250°C durchgeführt. Nach bestimmten Zeiten wurden Probekörper dem Ofen entnommen und nach Abkühlen auf 23°C einer Zug-Dehnungsprüfung gemäß ISO 527 bei 23°C und einer Zuggeschwindigkeit von 5 mm/min unterworfen.

## Patentansprüche

1. Polyamid-Formmasse mit folgender Zusammensetzung:
(A) 27-84,99 Gew.-% einer Polyamidmischung bestehend aus
(A1) mindestens einem teilaromatischen, teilkristallinen Polyamid mit einem Schmelzpunkt im Bereich von 255 bis 330°C,
(A2) mindestens einem, sich vom mindestens einen teilaromatischen, teilkristallinen Polyamid (A1) unterscheidenden caprolactamhaltigen Polyamid mit einem Gehalt an Caprolactam von wenigstens 50 Gew.-%,
wobei der Gesamtcaprolactamgehalt, d.h. die Summe des in Polyamid (A1) und Polyamid (A2) enthaltenen Caprolactams, 22 bis 30 Gew.-%, bezogen auf die Polyamidmischung, beträgt,
(B) 15-65 Gew.-% mindestens eines Füll- und Verstärkungsmittels,
(C) 0,01-3,0 Gew.-% mindestens eines Wärmestabilisators,
(D) 0-5,0 Gew.-% mindestens eines Additivs, wobei sich die Komponenten (A)-(D) auf 100 Gew.-% ergänzen,
**dadurch gekennzeichnet,**
**dass** der Polyamid-Formmasse keine Metallsalze und/oder Metalloxide eines Übergangsmetalls der Gruppe VB, VIB, VIIB oder VIIIB des Periodensystems zugesetzt sind.

2. Polyamid-Formmasse nach Anspruch 1, **dadurch gekennzeichnet, dass** die Polyamidmischung (A) aus
(A1) 70-78 Gew.-% mindestens einem teilaromatischen, teilkristallinen Polyamid mit einem Schmelzpunkt im Bereich von 255 - 330°C, und
(A2) mindestens einem caprolactamhaltigen Polyamid mit einem Gehalt an Caprolactam von wenigstens 50 Gew.-%,
besteht, wobei Komponente (A1) frei von Wiederholungseinheiten abgeleitet von Caprolactam und/oder Aminocapronsäure ist.

3. Polyamid-Formmasse nach einem der vorhergehenden Ansprüche, **dadurch gekennzeichnet, dass** der Gesamtcaprolactamgehalt 23 bis 29 Gew.-%, bevorzugt 24 bis 28 Gew.-%, bezogen auf die Polyamidmischung beträgt.

4. Polyamid-Formmasse nach einem der vorhergehenden Ansprüche, **dadurch gekennzeichnet, dass** die Polyamid-Formmasse 30 bis 79,9 Gew.-%, bevorzugt 35 bis 70 Gew.-% der Polyamidmischung enthält.

5. Polyamid-Formmasse nach einem der vorhergehenden Ansprüche, **dadurch gekennzeichnet, dass** der Schmelzpunkt des mindestens einen teilaromatischen, teilkristallinen Polyamid (A1) im Bereich von 270 bis 325 °C, bevorzugt im Bereich von 280 bis 320 °C liegt.

6. Polyamid-Formmasse nach einem der vorhergehenden Ansprüche, **dadurch gekennzeichnet, dass** das mindestens eine teilaromatische, teilkristalline Polyamid (A1) eine Glasübergangstemperatur im Bereich von 90 bis 140 °C, bevorzugt im Bereich von 110 bis 140 °C, besonders bevorzugt im Bereich von 115 bis 135 °C aufweist.

7. Polyamid-Formmasse nach einem der vorhergehenden Ansprüche, **dadurch gekennzeichnet, dass** das mindestens eine teilaromatische, teilkristalline Polyamid (A1) eine Lösungsmittelviskosität ηᵣₑₗ von höchstens 2,6, bevorzugt von 1,45 bis 2,3, weiter bevorzugt von 1,5 bis 2,0, insbesondere von 1,5 bis 1,8.

8. Polyamid-Formmasse nach einem der vorhergehenden Ansprüche, **dadurch gekennzeichnet, dass** das mindestens eine teilaromatische, teilkristalline Polyamid (A1) aus
a) Dicarbonsäuren, die bezogen auf die Gesamtmenge der Dicarbonsäuren mindestens 50 mol-% Terephthalsäure beinhalten,
b) Diaminen, die bezogen auf die Gesamtmenge der Diamine mindestens 80 mol-% aliphatische Diamine mit 4 bis 18 Kohlenstoffatomen, bevorzugt 6-12 Kohlenstoffatomen beinhalten, sowie gegebenenfalls
c) Lactamen und/oder Aminocarbonsäuren hergestellt ist.

9. Polyamid-Formmasse nach einem der vorhergehenden Ansprüche, **dadurch gekennzeichnet, dass** das mindestens eine teilaromatische, teilkristalline Polyamid (A1) aus
a) 50 bis 100 mol-% Terephthalsäure und/oder Naphthalindicarbonsäure sowie 0 bis 50 mol-% mindestens einer aliphatischen Dicarbonsäure mit 6 bis 12 Kohlenstoffatomen, und/oder 0 bis 50 mol-% mindestens einer cycloaliphatischen Dicarbonsäure mit 8 bis 20 Kohlenstoffatomen, und/oder 0 bis 50 mol-% Isophthalsäure, bezogen auf die Gesamtmenge der Dicarbonsäuren
b) 80 bis 100 mol-% mindestens eines aliphatischen Diamins mit 4-18 Kohlenstoffatomen, vorzugsweise mit 6 bis 12 Kohlenstoffatomen sowie 0 bis 20 mol-% mindestens eines cycloaliphatischen Diamins, vorzugsweise mit 6 bis 20 Kohlenstoffatomen, und/oder 0 bis 20 mol-% mindestens eines araliphatischen Diamins, wie z.B. PACM, MACM, IPDA, MXDA und PXDA, bezogen auf die Gesamtmenge der Diamine sowie gegebenenfalls,
c) Aminocarbonsäuren und/oder Lactamen je mit 6 bis 12 Kohlenstoffatomen,
hergestellt ist.

10. Polyamid-Formmasse nach einem der vorhergehenden Ansprüche, **dadurch gekennzeichnet, dass** das mindestens eine teilaromatische, teilkristalline Polyamid (A1) ausgewählt ist aus der Gruppe bestehend aus PA 4T/4I, PA 4T/6I, PA 5T/5I, PA 6T/6, PA 6T/6I, PA 6T/6I/6, PA 6T/66, PA 6T/610, PA 10T/106, PA 6T/612, PA 6T/10T, PA 6T/10I, PA 9T, PA 10T, PA 12T, PA 10T/10I, PA10T/12, PA1OT/11, PA 6T/9T, PA 6T/12T, PA 6T/10T/6I, PA 6T/6I/6, PA 6T/6I/12 sowie Mischungen davon.

11. Polyamid-Formmasse nach einem der vorhergehenden Ansprüche, **dadurch gekennzeichnet dass** das mindestens eine caprolactamhaltige Polyamid (A2) einen Gehalt an Caprolactam von wenigstens 60 Gew.-%, bevorzugt wenigstens 70 Gew.-% aufweist.

12. Polyamid-Formmasse nach einem der vorhergehenden Ansprüche, **dadurch gekennzeichnet dass** das mindestens eine caprolactamhaltige Polyamid (A2) eine Lösungsmittelviskosität ηᵣₑₗ im Bereich von 1,6 bis 3,0, bevorzugt im Bereich von 1,7 bis 2,5, insbesondere im Bereich von 1,8 bis 2,2 aufweist.

13. Polyamid-Formmasse nach einem der vorhergehenden Ansprüche, **dadurch gekennzeichnet dass** das mindestens eine caprolactamhaltige Polyamid (A2) ausgewählt ist aus der Gruppe bestehend aus PA 6, PA 6/12, PA 6/66 und/oder PA 6/6T.

14. Polyamid-Formmasse nach einem der vorhergehenden Ansprüche, **dadurch gekennzeichnet dass** das mindestens eine Füll- und Verstärkungsmittel (B) ausgewählt ist aus der Gruppe bestehend aus
a) Glas- und/oder Kohlenstofffasern, bevorzugt mit einer Länge im Bereich von 0,2 bis 50 mm und/oder einem Durchmesser von 5 bis 40 µm und/oder Endlosfasern (Rovings),
b) teilchenförmigen Füllstoffen, vorzugsweise mineralischen Füllstoffen auf Basis von natürlichen und/oder synthetischen Schichtsilikaten, Talk, Glimmer, Silikat, Quarz, Titandioxid, Wollastonit, Kaolin, amorphen Kieselsäuren, Magnesiumcarbonat, Magnesiumhydroxid, Kreide, Kalk, Feldspat, Bariumsulfat, Voll- oder Hohl-Glaskugeln oder gemahlenem Glas, dauerhaft magnetische bzw. magnetisierbare Metallverbindungen und/oder Legierungen und/oder Mischungen hieraus, und/oder
c) Mischungen aus Glas- und/oder Kohlenstofffasern und teilchenförmigen Füllstoffen.

15. Polyamid-Formmasse nach einem der vorhergehenden Ansprüche, **dadurch gekennzeichnet dass** der mindestens eine Wärmestabilisator (C) ausgewählt ist aus der Gruppe bestehend aus
a) Verbindungen des ein- oder zweiwertigen Kupfers, z.B. Salze des ein- oder zweiwertigen Kupfers mit anorganischen oder organischen Säuren oder ein- oder zweiwertigen Phenolen, die Oxide des ein- oder zweiwertigen Kupfers, oder Komplexverbindungen von Kupfersalzen mit Ammoniak, Aminen, Amiden, Lactamen, Cyaniden oder Phosphinen, bevorzugt Cu(I)- oder Cu(II)-Salze der Halogenwasserstoffsäuren, der Cyanwasserstoffsäuren oder die Kupfersalze der aliphatischen Carbonsäuren, besonders bevorzugt CuCl, CuBr, CuI, CuCN und Cu₂O, CuCl₂, CuSO₄, CuO, Kupfer(II)acetat oder Kupfer(II)stearat,
b) Stabilisatoren auf Basis sekundärer aromatischer Amine,
c) Stabilisatoren auf Basis sterisch gehinderter Phenole
d) Phosphite und Phosphonite, sowie
e) Mischungen der vorstehend genannten Stabilisatoren.

16. Polyamid-Formmasse mit folgender Zusammensetzung:
(A) 27-79,9 Gew.-% einer Polyamidmischung bestehend aus
(A1) PA 6T/66,
(A2) PA 6,
wobei der Gesamtcaprolactamgehalt, d.h. die Summe des in Polyamid (A1) und Polyamid (A2) enthaltenen Caprolactams, 22 bis 30 Gew.-% bezogen auf die Polyamidmischung beträgt,
(B) 20-65 Gew.-% Glasfasern sowie Schichtsilikaten,
(C) 0,1-3,0 Gew.-% eines Wärmestabilisators enthaltend mindestens eine Verbindung des ein- oder zweiwertigen Kupfers,
(D) 0-5,0 Gew.-% mindestens eines Additivs,
wobei sich die Komponenten (A)-(D) auf 100 Gew.-% ergänzen.

17. Formkörper hergestellt aus einer Polyamid-Formmasse nach einem der vorhergehenden Ansprüche, bevorzugt in Form eines Bauteils für den Automobil- oder Elektro/Elektronikbereich, insbesondere Zylinderkopfhauben, Motorabdeckungen, Gehäuse für Ladeluftkühler, Ladeluftkühlerklappen, Ansaugrohre, Ansaugkrümmer, Konnektoren, Zahnräder, Lüfterräder, Kühlwasserkästen, Gehäuse oder Gehäuseteil für Wärmetauscher, Kühlmittelkühler, Ladeluftkühler, Thermostat, Wasserpumpe, Heizkörper, Befestigungsteile, in Form eines elektrischen oder elektronischen Bauteils, einer Leiterplatte, einem Teil einer Leiterplatte, eines Gehäusebestandteils, einer Folie, einer Leitung, insbesondere in Form eines Schalters, eines Verteilers, eines Relais, eines Widerstandes, eines Kondensators, einer Spule, einer Lampe, einer Dioden, einer LED, eines Transistors, eines Konnektors, eines Reglers, eines Speichers und/oder eines Sensors.

## Claims

1. A polyamide molding compound having the following composition:
(A) 27-84,99 wt% of a polyamide mixture consisting of
(A1) at least one semiaromatic, semicrystalline polyamide having a melting point in the range of 255 to 330°C,
(A2) at least one caprolactam-containing polyamide that is different from the at least one semiaromatic, semicrystalline polyamide (A1) and that has a caprolactam content of at least 50 wt%,
where the total caprolactam content, i.e.,the sum of the caprolactam contained in polyamide (A1) and polyamide (A2) is 22-30 wt%, with respect to the polyamide mixture,
(B) 15-65 wt% of at least one filler and reinforcing agent,
(C) 0.01-3.0 wit% of at least one thermal stabilizer,
(D) 0-5.0 wt% of at least one additive,
where the components (A)-(D) make 100 wt%, **characterized in that** no metal salts and/or metal oxides of a transition metal of the groups VB, VIB, VIIIB or VIIIB of the periodic table are added to the polyamide molding compound.

2. A polyamide molding compound as in Claim 1, **characterized in that** the polyamide mixture (A) consists of
(A1) 70-78 wt% of at least one semiaromatic, semicrystalline polyamide having a melting point in the range of 255-330°C,
and
(A2) at least one caprolactam-containing polyamide having a caprolactam content of at least 50 wt%,
where component (A1) is free of repeating units derived from caprolactam and/or aminocaproie acid.

3. Polyamide molding compounds as in one of the preceding claims, **characterized in that** the total caprolactam content is 23-29 wt%, preferably 24-28 wt%, with respect to the polyamide mixture.

4. A polyamide molding compound as in one of the preceding claims, **characterized in that** the polyamide molding compound contains 30-79.9 wt%, preferably 35-70 wt% of the polyamide mixture.

5. A polyamide molding compound as in one of the preceding claims, **characterized in that** the melting point of the at least one semiaromatic, semicrystalline polyamide (A1) lies in the range of 270-325°C, preferably in the range of 280-320°C.

6. A polyamide molding compound as in one of the preceding claims, **characterized in that** the at least one semiaromatic, semicrystalline polyamide (A1) has a glass transition temperature in the range of 90-140°C, preferably in the range of 110-140°C, especially preferably in the range of 115-135°C.

7. A polyamide molding compound as in one of the preceding claims, **characterized in that** the at least one semiaromatic, semicrystalline polyamide (A1) has a solution viscosity ηᵣₑₗ of a maximum of 2.6, preferably 1.45-2.3, more preferably 1.5-2.0, especially 1.5-1.8.

8. A polyamide molding compound as in one of the preceding claims, **characterized in that** the at least one semiaromatic, semicrystalline polyamide (A1) is prepared from
a) dicarboxylic acids that contain at least 50 mol% terephthalic acid with respect to the total amount of dicarboxylic acids,
b) diamines that contain at least 80 mol% aliphatic diamines having 4-18 carbon atoms, preferably 6-12 carbon atoms, with respect to the total amount of diamines, and optionally
c) lactams and/or aminocarboxylic acids.

9. A polyamide molding compound as in one of the preceding claims, **characterized in that** the at least one semiaromatic, semicrystalline polyamide (A1) is prepared from
a) 50-100 mol% terephthalic acid and/or naphthalenedicarboxylic acid and 0-50 mol% of at least one aliphatic dicarboxylic acid having 6-12 carbon atoms, and/or 0-50 mol% of at least one cycloaliphatic dicarboxylic acid having 8-20 carbon atoms, and/or 0-50 mol% isophthalic acid, with respect to the total amount of the dicarboxylic acids
b) 80-100 mol% of at least one aliphatic diamine having 4-18 carbon atoms, preferably having 6-12 carbon atoms, and 0-20 mol% of at least one cycloaliphatic diamine, preferably having 6-20 carbon atoms, and/or 0-20 mol% of at least one araliphatic diamine such as PACM, MACM, IPDA, MXDA, and PXDA, with respect to the total amount of the diamines, and optionally
c) aminocarboxylic acids and/or lactams, each having 6-12 carbon atoms.

10. A polyamide molding compound as in one of the preceding claims, **characterized in that** the at least one semiaromatic, semicrystalline polyamide (A1) is chosen from the group consisting of PA 4T/4I, PA 4T/6I, PA 5T/5I, PA 6T/6, PA 6T/6I, PA 6T/6I/6, PA 6T/66, PA 6T/610, PA 10T/106, PA 6T/612, PA 6T/10T, PA 6T/10I, PA 9T, PA 10T, PA 12T, PA 10T/10I, PA10T/12, PA10T/11, PA 6T/9T, PA 6T/12T, PA 6T/10T/6I, PA 6T/6I/6, PA 6T/6I/12, and mixtures thereof.

11. A polyamide molding compound as in one of the preceding claims, **characterized in that** the at least one caprolactam-containing polyamide (A2) has a caprolactam content of at least 60 wt%, preferably at least 70 wt%.

12. A polyamide molding compound as in one of the preceding claims, **characterized in that** the at least one caprolactam-containing polyamide (A2) has a solution viscosity ηᵣₑₗ in the range of 1.6-3.0, preferably in the range of 1.7-2.5, especially in the range of 1.8-2.2.

13. A polyamides molding compound as in one of the preceding claims, **characterized in that** the at least one caprolactam-containing polyamide (A2) is chosen from the group consisting of PA 6, PA 6/12, PA 6/66 and/or PA 6/6T.

14. A polyamide molding compound as in one of the preceding claims, **characterized in that** the at least one filler and reinforcing agent (B) is chosen from the group consisting of
a) glass and/or carbon fibers, preferably having a length in the range of 0.2-50 mm and/or a diameter from 5-40 µm and/or endless fibers (rovings),
b) particulate fillers, preferably mineral fillers based natural and/or synthetic layer silicates, talc, mica, silicate, quartz, titanium dioxide, wollastonite, kaolin, amorphous silicas, magnesium carbonate, magnesium hydroxide, chalk, lime, feldspar, barium sulfate, solid or hollow glass beads or ground glass, permanently magnetic or magnetizable metal compounds and/or alloys and/or mixtures thereof, and/or
c) mixtures of glass and/or carbon fibers and particulate fillers.

15. A polyamide molding compound as in one of the preceding claims, **characterized in that** the at least thermal stabilizer (C) is chosen from the group consisting of
a) compounds of mono- or divalent copper, for example salts of mono- or divalent copper with inorganic or organic acids or a mono- or dihydric phenol, the oxides of mono- or divalent copper, or complex compounds of copper salts with ammonia, amines, amides, lactams, cyanides or phosphines, preferably Cu(I) or Cu(II) salts of halohydric acids, cyanohydric acids or the copper salts of aliphatic carboxylic acids, especially preferably CuCl, CuBr, CuI, CuCN and Cu₂O, CuCl₂, CuSO₄, CuO, copper(II) acetate or copper(II) stearate
b) stabilizers based on secondary aromatic amines,
c) stabilizers based on sterically hindered phenols,
d) phosphites and phosphonites, and
e) mixtures of the above-mentioned stabilizers.

16. A polyamide molding compound having the following composition:
(A) 27-79.9 wt% of a polyamide mixture consisting of
(A1) PA 6T/66,
(A2) PA 6,
where the total caprolactam content, i.e., the sum of the caprolactam contained in polyamide (A1) and polyamide (A2), is 22-30 wt% with respect to the polyamide mixture,
(B) 20-65 wt% glass fibers and also layer silicates,
(C) 0.1-3.0 wt% of a heat stabilizer containing at least one compound of mono- or divalent copper,
(D) 0-5.0 wt% of at least one additive,
where the components (A)-(D) add up to 100 wt%.

17. Molded objects made from a polyamide molding compound as in one of the preceding claims, preferably in the form of a component for the automotive or electric/electronics field, in particular cylinder head covers, motor covers, housings for intercoolers, intercooler valves, intake pipes, intake manifolds, connectors, gear wheels, fan wheels, coolant containers, housings or housing parts for heat exchangers, radiators, intercoolers, thermostats, water pumps, heaters, fastening elements, in the form of an electric or electronic component, a circuitboard, a part of a circuitboard, a housing component, a film, a conductor, especially in the form of a switch, a terminal strip, a relay, a resistor, a capacitor, a coil, a lamp, a diode, an LED, a transistor, a connector, a controller, a memory, and/or a sensor.

## Revendications

1. Matière à mouler en polyamide présentant la composition suivante :
(A) de 27 à 84,99 % en poids d'un mélange de polyamides se composant de
(A1) au moins un polyamide partiellement aromatique partiellement cristallin avec un point de fusion situé dans la plage allant de 255 à 330°C,
(A2) au moins un polyamide contenant du caprolactame, différent d'au moins un polyamide partiellement aromatique, partiellement cristallin (A1) présentant une teneur en caprolactame au moins égale à 50 % en poids,
la teneur totale en caprolactame, c.-à-d. la somme du caprolactame contenu dans le polyamide (A1) et le polyamide (A2), étant de 22 à 30 % en poids, rapportée au mélange de polyamides,
(B) de 15 à 65 % en poids d'au moins un agent de charge et de renforcement,
(C) de 0,01 à 3,0 % en poids d'au moins un stabilisant thermique,
(D) de 0 à 5,0 % en poids d'au moins un additif,
la somme des composants (A)-(D) étant égale à 100 % en poids,
**caractérisée en ce que** la matière à mouler en polyamide ne contient aucun ajout de sels et/ou oxydes métalliques d'un métal de transition des groupes VB, VIB, VIIB ou VIIIB du Tableau périodique des éléments.

2. Matière à mouler en polyamide selon la revendication 1, **caractérisée en ce que** le mélange de polyamides (A) se compose de
(A1) 70 à 78 % en poids d'au moins un polyamide partiellement aromatique partiellement cristallin avec un point de fusion situé dans la plage allant de 255 à 330°C, et
(A2) au moins un polyamide contenant du caprolactame présentant une teneur en caprolactame au moins égale à 50 % en poids,
le composant (A1) étant dépourvu d'unités répétitives dérivées du caprolactame et/ou de l'acide aminocaproïque.

3. Matière à mouler en polyamide selon l'une quelconque des revendications précédentes, **caractérisée en ce que** la teneur totale en caprolactame va de 23 à 29 % en poids, de préférence de 24 à 28 % en poids, rapportée au mélange de polyamides.

4. Matière à mouler en polyamide selon l'une quelconque des revendications précédentes, **caractérisée en ce que** la matière à mouler en polyamide contient de 30 à 79,9 % en poids, de préférence de 35 à 70 % en poids du mélange de polyamides.

5. Matière à mouler en polyamide selon l'une quelconque des revendications précédentes, **caractérisée en ce que** le point de fusion de l'au moins un polyamide partiellement aromatique, partiellement cristallin (A1) se situe dans la plage allant de 270 à 325 °C, de préférence dans la plage allant de 280 à 320°C.

6. Matière à mouler en polyamide selon l'une quelconque des revendications précédentes, **caractérisée en ce que** l'au moins un polyamide partiellement aromatique, partiellement cristallin (A1) présente une température de transition vitreuse se situant dans la plage allant de 90 à 140 °C, de préférence dans la plage allant de 110 à 140°C, de manière particulièrement préférée dans la plage allant de 115 à 135°C.

7. Matière à mouler en polyamide selon l'une quelconque des revendications précédentes, **caractérisée en ce que** l'au moins un polyamide partiellement aromatique, partiellement cristallin (A1) présente une viscosité du solvant ηᵣₑₗ de maximum 2,6, de préférence allant de 1,45 à 2,3, de manière davantage préférée de 1,5 à 2,0, en particulier de 1,5 à 1,8.

8. Matière à mouler en polyamide selon l'une quelconque des revendications précédentes, **caractérisée en ce que** l'au moins un polyamide partiellement aromatique, partiellement cristallin (A1) est préparé à partir
a) d'acides dicarboxyliques contenant au moins 50 % en moles d'acide téréphtalique, rapporté à la quantité totale des acides dicarboxyliques,
b) de diamines contenant au moins 80 % en moles de diamines aliphatiques de 4 à 18 atomes de carbone, de préférence de 6 à 12 atomes de carbone, rapporté à la quantité totale des diamines, ainsi que, le cas échéant,
c) de lactames et/ou d'acides aminocarboxyliques.

9. Matière à mouler en polyamide selon l'une quelconque des revendications précédentes, **caractérisée en ce que** l'au moins un polyamide partiellement aromatique, partiellement cristallin (A1) est préparé à partir
a) de 50 à 100% en moles d'acide téréphtalique et/ou d'acide naphtalène-dicarboxylique ainsi que de 0 à 50 % en moles d'au moins un acide dicarboxylique aliphatique de 6 à 12 atomes de carbone, et/ou de 0 à 50 % en moles d'au moins un acide dicarboxylique cycloaliphatique de 8 à 20 atomes de carbone, et/ou de 0 à 50 % en moles d'acide isophtalique, rapporté à la quantité totale des acides dicarboxyliques
b) de 80 à 100% en moles d'au moins une diamine aliphatique de 4 à 18 atomes de carbone, de préférence de 6 à 12 atomes de carbone, ainsi que de 0 à 20 % en moles d'au moins une diamine cycloaliphatique, de préférence de 6 à 20 atomes de carbone, et/ou de 0 à 20 % en moles d'au moins une diamine araliphatique telle que le PACM, la MACM, l'IPDA, la MXDA et la PXDA, rapporté à la quantité totale des diamines, ainsi que, le cas échéant,
c) d'acides aminocarboxyliques et/ou de lactames contenant chacun de 6 à 12 atomes de carbone.

10. Matière à mouler en polyamide selon l'une quelconque des revendications précédentes, **caractérisée en ce que** l'au moins un polyamide partiellement aromatique, partiellement cristallin (A1) est choisi parmi le groupe comprenant les PA 4T/4I, PA 4T/6I, PA 5T/5I, PA 6T/6, PA 6T/6I, PA 6T/6I/6, PA 6T/66, PA 6T/610, PA 10T/106, PA 6T/612, PA 6T/10T, PA 6T/10I, PA 9T, PA 10T, PA 12T, PA 10T/10I, PA10T/12, PA10T/11, PA 6T/9T, PA 6T/12T, PA 6T/10T/6I, PA 6T/6I/6, PA 6T/6I/12, ainsi que des mélanges de ceux-ci.

11. Matière à mouler en polyamide selon l'une quelconque des revendications précédentes, **caractérisée en ce que** l'au moins un polyamide contenant du caprolactame (A2) présente une teneur en caprolactame au moins égale à 60 % en poids, de préférence au moins égale à 70 % en poids.

12. Matière à mouler en polyamide selon l'une quelconque des revendications précédentes, **caractérisée en ce que** l'au moins un polyamide contenant du caprolactame (A2) présente une viscosité du solvant ηᵣₑₗ dans la plage allant de 1,6 à 3,0, de préférence dans la plage allant de 1,7 à 2,5, en particulier dans la plage allant de 1,8 à 2,2.

13. Matière à mouler en polyamide selon l'une quelconque des revendications précédentes, **caractérisée en ce que** l'au moins un polyamide contenant du caprolactame (A2) présente est choisi parmi le groupe comprenant les PA 6, PA 6/12, PA 6/66 et/ou PA 6/6T.

14. Matière à mouler en polyamide selon l'une quelconque des revendications précédentes, **caractérisée en ce que** l'au moins un agent de charge et de renforcement (B) est choisi parmi le groupe se composant
a) des fibres de verre et/ou de carbone, de préférence présentant une longueur située dans la plage allant de 0,2 à 50 mm et/ou un diamètre de 5 à 40 µm, et/ou des filaments (Rovings),
b) des matières de charge particulaires, de préférence des charges minérales à base de silicates lamellaires naturels et/ou synthétiques, talc, mica, silicate, quartz, dioxyde de titane, wollastonite, kaolin, acides siliciques amorphes, carbonate de magnésium, hydroxyde de magnésium, craie, chaux, feldspath, sulfate de baryum, billes de verre pleines ou creuses ou verre broyé, composés métallique durablement magnétiques ou magnétisables et/ou alliages et/ou mélanges de ceux-ci, et/ou
c) des mélanges de fibres de verre et/ou de carbone et de matières de charge particulaires.

15. Matière à mouler en polyamide selon l'une quelconque des revendications précédentes, **caractérisée en ce que** l'au moins un stabilisant thermique (C) est choisi parmi le groupe se composant
a) des composés de cuivre uni- ou divalent, p. ex. des sels de cuivre uni- ou divalent avec des acides inorganiques ou organiques ou des phénols uni- ou divalent, des oxydes de cuivre uni- ou divalent, ou des composés complexes de sels de cuivre avec de l'ammoniaque, des amines, des amides, des lactames, des cyanures ou des phosphines, de préférence des sels de Cu(I) ou Cu(II) des hydracides halogénés, des acides cyanhydriques ou les sels de cuivre des acides carboxyliques aliphatiques, de manière particulièrement préférée les CuCl, CuBr, CuI, CuCN et Cu₂O, CuCl₂, CuSO₄, CuO, acétate de cuivre (II) ou stéarate de cuivre (II),
b) des stabilisants à base d'amine secondaires aromatiques,
c) des stabilisants à base de phénols à empêchement stérique,
d) des phosphites et phosphonites, ainsi que
e) des mélanges des stabilisants précités.

16. Matière à mouler en polyamide présentant la composition suivante :
(A) de 27 à 79,9% en poids d'un mélange de polyamides se composant de
(A1) PA 6T/66,
(A2) PA 6,
la teneur totale en caprolactame, c.-à-d. la somme du caprolactame contenu dans le polyamide (A1) et le polyamide (A2), étant de 22 à 30 % en poids, rapportée au mélange de polyamides,
(B) de 20 à 65 % en poids de fibres de verre ainsi que de silicates lamellaires,
(C) de 0,1 à 3,0 % en poids d'un stabilisant thermique contenant au moins un composé de cuivre uni- ou divalent,
(D) de 0 à 5,0 % en poids d'au moins un additif,
la somme des composants (A)-(D) étant égale à 100 % en poids.

17. Corps moulé fabriqué à partir d'une matière à mouler en polyamide selon l'une quelconque des revendications précédentes, de préférence sous la forme d'un composant destiné au secteur automobile ou au secteur électrique/électronique, en particulier couvercles supérieurs de soupapes, capots de moteurs, boîtiers de refroidisseurs d'air de suralimentation, volets de refroidisseurs d'air de suralimentation, tubulures d'admission, collecteurs d'admission, connecteurs, engrenages, roues de ventilateurs, caisses à eau de refroidissement, boîtiers ou parties de boîtiers d'échangeurs thermiques, refroidisseurs de fluides caloporteurs, refroidisseurs d'air de suralimentation, thermostats, pompes à eau, résistances chauffantes, éléments de fixation, sous forme de composant électrique ou électronique, circuit imprimé, une partie d'un circuit imprimé, un composant de boîtier, une feuille, une ligne, en particulier sous la forme d'un interrupteur, un distributeur, un relais, une résistance, un condensateur, une bobine, une lampe, une diode, une LED, un transistor, un connecteur, un régulateur, une mémoire et/ou un capteur.
